# NEUE EUROPÄISCHE PATENTSCHRIFT

(11) **EP 3 405 290 B2**
(45) Veröffentlichungstag und Bekanntmachung des Hinweises auf die Entscheidung über den Einspruch: **29.07.2026**
(45) Hinweis auf die Patenterteilung: 29.12.2021
(21) Anmeldenummer: 17701678.9
(22) Anmeldetag: 23.01.2017
(51) Int. Cl.: B04B 11/04, G01N 35/04, G01N 35/00, G01N 35/10

(54) **ZENTRIFUGE**
CENTRIFUGE
CENTRIFUGEUSE

(30) Priorität: 22.01.2016 DE 102016101163
(43) Veröffentlichungstag der Anmeldung: 28.11.2018
(73) Patentinhaber: BlueCatBio GmbH, 95512 Neudrossenfeld (DE)
(72) Erfinder: MANN, Wolfgang, 95512 Hornungsreuth (DE); HEIMBERG, Wolfgang, 85560 Ebersberg (DE); JUNKERSFELD, Johann, 85661 Forstinning (DE); ERZBERGER, Matthias, 85643 Steinhöring (DE); FEIST, Frank, Concord, MA 01742 (US)
(74) Vertreter: HGF
(86) Internationale Anmeldenummer: PCT/EP2017/051289
(87) Internationale Veröffentlichungsnummer: WO 2017/125598

(56) Entgegenhaltungen:
- EP-A1- 1 270 078
- EP-A1- 1 270 078
- WO-A2-2015/018878
- WO-A2-2015/018878
- JP-A- 2009 264 927
- JP-A- 2009 264 927
- US-A- 4 953 575

## Beschreibung

Die vorliegende Erfindung betrifft eine Zentrifuge mit einer Beladungs- und Entladungseinrichtung um eine Reaktionsgefäßeinheit präzise in den Rotorraum hinein und aus dem Rotorraum hinauszuführen. Ferner betrifft die vorliegende Erfindung eine optische Detektionseinrichtung als Bestandteil einer Zentrifuge. Außerdem betrifft die vorliegende Erfindung eine Zentrifuge in welche oder aus welcher heraus eine Reaktionseinheit präzise mit einem Robotergreifarm geführt werden kann.

Die Automatisierung einzelner Labortätigkeiten ist in der heutigen Zeit schon fast unumgänglich. So wird versucht, möglichst viele Schritte, welche zuvor manuell durchgeführt werden mussten, nun durch einen automatisierten Ablauf möglichst ganz ohne das Zutun einer Arbeitskraft zu ersetzen. Allerdings ist es nicht immer sehr leicht Arbeitsschritte, welche eine sehr präzise Handhabung einzelner Versuchskomponenten voraussetzen durch automatisierte Vorrichtungen durchführen zu lassen. Bei Laborarbeiten, insbesondere beim Pipettieren, ist es bei vielen Arbeitsschritten notwendig Flüssigkeiten auf zehntel Millimeter genau in dafür vorgesehene Gefäße zu transferieren. Somit stellt sich die Herausforderung sowohl das Gefäß als auch die Pipette sehr präzise aufeinander abzustimmen. Das gleiche gilt für das Entleeren von Reaktionsgefäßen durch Herauspipettieren oder Absaugen, beispielsweise um die Innenflächen der Reaktionsgefäße zu waschen.

Ebenso wünschenswert ist es, mehrere Versuchsschritte, die bei der Durchführung eines einzelnen Experimentes häufig aufeinanderfolgen, möglichst in einer Vorrichtung durchführen zu können, um somit die Transportwege der einzelnen Komponenten wie z. B. der Reaktionsgefäße möglichst zu minimieren oder sogar zu vermeiden. Der Transport der Komponenten stellt nicht nur eine zusätzliche Fehlerquelle, durch zum Beispiel Kontamination, dar, sondern beansprucht auch zusätzlich Zeit.

DE 10 2008 042 971 A1 offenbart eine Zentrifuge, in welche eine Magneteinrichtung integriert ist, um dadurch magnetisierbare Partikel innerhalb eines Reaktionsgefäßes mittels der Magnetkraft zu halten.

CN 102175855 A offenbart einen vollautomatischen 360° Grad Plattenwaschautomaten. Die Rotationsachse dieses Automaten läuft parallel zur horizontalen Ebene und erlaubt so das Waschen mehrerer Platten gleichzeitig in einem Gehäuse, wodurch die Effektivität gesteigert und die Kosten stark reduziert werden können. US 4,953,575 betrifft eine Waschvorrichtung für Küvetten. Hierfür werden die Küvetten in einer Halterung in einem Rotor platziert. Durch Drehen des Rotors wird die Flüssigkeit aus den Küvetten entfernt.

JP 2009264927 A offenbart eine Vorrichtung umfassend eine Trommel, in welcher eine Mikroplatte platziert werden kann. Die Trommel kann mit mehreren Mikrotiterplatten beladen werden, welche sich dann um eine horizontale Rotationsachse drehen. Die Trommel wird derart mit der Mikrotiterplatte beladen, so dass deren Öffnungen in Richtung des Inneren der Trommel gerichtet sind.

Dokument EP 937502 A2 beschreibt ein Verfahren zur Handhabung einer Mikrotiterplatte, wobei die Mikrotiterplatte mittels Zentrifugation gereinigt werden kann. Hierfür wird die Mikrotiterplatte über ein Förderband in dem Rotationsgehäuse platziert, so dass die Öffnungen der Mikrotiterplatte von der Rotationsachse weggerichtet sind.

EP 1 270 078 A1 offenbart eine Zentrifuge mit vertikaler Rotationsachse. Die Zentrifuge kann von oben mittels einer vertikal verschiebebaren Vorrichtung be- und entladen werden. Die Reaktionsgefäße werden hierbei in schwingenden Halterungen positioniert. Es wird beschrieben, dass die Zentrifuge sich insbesondere für automatisierte Zentrifugationsabläufe eignet.

Aus der WO 2015/018878 A1 geht eine weitere Zentrifuge hervor, welche einen elastischen Arm aufweist, mit welchem Mikrotiterplatten in den Rotor der Zentrifuge gezogen werden können bzw. aus diesem Rotor geschoben werden können

Eine Aufgabe der vorliegenden Erfindung ist es, eine Zentrifuge bereitzustellen, welche eine Beladungs- und Entladungseinrichtung umfasst, die ein präzises Manövrieren einer Reaktionsgefäßeinheit in den Rotorraum hinein sowie aus dem Rotorraum hinaus ermöglicht. Eine weitere Aufgabe der vorliegenden Erfindung liegt darin, eine Zentrifuge bereitzustellen, mit welcher auf engstem Raum komplexe Verfahrensschritte ausführbar sind

Eine oder mehrere dieser Aufgaben werden durch den Gegenstand des unabhängigen Anspruchs gelöst.

Bevorzugte Ausführungsformen werden in den abhängigen Unteransprüchen beschrieben.

Gemäß dem ersten Aspekt der vorliegenden Erfindung wird eine Zentrifuge bereitgestellt, welche einen Rotor und einen Rotorraum aufweist, in welchem der Rotor angeordnet und um eine Rotationsachse drehbar gelagert ist, wobei der Rotor einen Aufnahmebereich zum Aufnehmen einer Reaktionsgefäßeinheit mit Reaktionsgefäßen aufweist, und derart ausgebildet ist, dass die Reaktionsgefäßeinheit zum Entleeren der Reaktionsgefäße mit ihren Öffnungen von der Rotationsachse weg orientiert aufgenommen werden kann, und die Zentrifuge mit einer Beladungs- und Entladungseinrichtung versehen ist, umfassend eine starre Verschiebestange zum Positionieren einer Reaktionsgefäßeinheit im oder zum Entfernen einer Reaktionsgefäßeinheit vom Rotor, wobei die Verschiebestange derart horizontal verschiebbar angeordnet ist, dass sie zwischen einer Entladestellung, bei der sie sich im Rotorraum durch den Rotor hindurch erstreckt, und einer Beladestellung, bei der sie zumindest aus dem Bereich des Rotorraums herausgezogen ist, der vom Rotor bei einer Umdrehung beansprucht wird, bewegbar ist, und einen Linearantrieb zum Bewegen der Verschiebestange zwischen der Entladestellung und der Beladestellung und wobei die Zentrifuge eine Detektionseinrichtung zur Bestimmung der Position der Verschiebestange in Bewegungsrichtung sowie eine Pipettiereinheit mit mehreren Pipettierdüsen aufweist, so dass eine Reaktionsgefäßeinheit unter der Pipettiereinheit angeordnet werden kann, um ein Reaktionsgefäß zu befüllen.

Eine Zentrifuge gemäß der vorliegenden Erfindung ermöglicht es, mittels der beschriebenen Beladungs- und Entladungseinrichtung eine Reaktionsgefäßeinheit sowohl sehr präzise in eine bestimmte Endposition zu bringen als auch eine Reaktionsgefäßeinheit während des Verschiebevorgangs mit sehr hoher Präzision zu bewegen.

Die Beladungs- und Entladungseinrichtung umfasst eine Verschiebestange, welche starr ist und eine vom Linearantrieb erzeugte Bewegung sehr präzise überträgt.

Die Verschiebestange ist derart angeordnet, dass sie durch einen Linearantrieb lediglich entlang einer horizontalen Achse vor und zurück bewegt wird ohne bei ihrer Bewegung abweichende Bewegungen in andere Richtungen zu zulassen.

Eine "starre Verschiebestange" im Sinne der vorliegenden Erfindung bedeutet, dass die Verschiebestange bei zweckentsprechender Benutzung nicht gebogen wird bzw. die Biegungen im mikroskopischen Bereich liegen, so dass sie auf die Längserstreckung der Verschiebestange keine Auswirkung haben.

Aufgrund der starren Ausbildung der Verschiebestange kann diese einfach und zuverlässig gegenüber von den Rotorraum begrenzenden Wandungen abgedichtet werden. Hierdurch kann die Gefahr von der aus dem Rotorraum austretenden Kontamination gering gehalten werden.

Dadurch, dass die hierin beschriebene Beladungs- und Entladungseinrichtung eine sehr präzise Positionierung einer Reaktionsgefäßeinheit in Bewegungsrichtung ermöglicht, kann die Position der Reaktionsgefäßeinheit exakt mit einer zweiten Vorrichtung koordiniert werden. Bei solch einer weiteren Vorrichtung kann es sich zum Beispiel um eine Pipettiereinheit, eine Detektiereinheit, einen Roboterarm oder dergleichen handeln.

Mit der starren Verschiebestange ist eine "absolute Positionierung" möglich. Unter absoluter Positionierung wird verstanden, dass bei Kenntnis der Position der Verschiebestange auch die Position einer an die Verschiebestange gekoppelte Reaktionsgefäßeinheit bekannt ist. Die starre Verschiebestange ist aufgrund ihrer Starrheit mit ihrem freien Ende im Rotorraum derart präzise positionierbar, dass es keine Auslenkung nach oben oder unten oder zur Seite gibt, die Einfluss auf die Position des freien Endes in Längsrichtung der Pipettierstange haben. Hierdurch kann, wenn ein bestimmter Punkt der Verschiebestange die Position bekannt ist, auf die Position des freien Endes, die sich im Rotorraum oder im Aufnahmebereich vor dem Rotorraum befindet, geschlossen werden. Daher genügt es, wenn beispielsweise die Position des Endes der Verschiebestange, die mit dem Linearantrieb verbunden ist, gesteuert oder detektiert wird, um die Position der Reaktionsgefäßeinheit zu kennen. Hierdurch ist es nicht notwendig, im Rotorraum Sensoren zum Detektieren des freien Endes der Verschiebestange oder Sensoren zum Detektieren der Reaktionsgefäßeinheit oder einer Trägereinheit für die Reaktionsgefäßeinheit vorzusehen. Die Pipettiereinheit kann beweglich sein oder an dem Zentrifugengehäuse stationär befestigt sein. Durch das präzise Manövrieren der Reaktionsgefäßeinheit unterhalb der Pipettiereinheit kann ein exaktes und sauberes, d. h. ohne die Gefahr von Danebenpipettieren oder Überschwappen, Befüllen des Reaktionsgefäßes mittels der Pipettiereinheit sichergestellt werden. Dadurch wird ein automatisches Befüllen von Reaktionsgefäßen mittels einer Pipettiereinheit und gleichzeitig das automatische Be- und Entladen einer Zentrifuge mit dieser Reaktionsgefäßeinheit ermöglicht.

So kann z. B. vor dem Beladen der Zentrifuge die Reaktionsgefäßeinheit mit einer Lösung befüllt werden, welche im Anschluss durch die Zentrifugation um eine horizontale Achse, wobei die Öffnung der Reaktionsgefäßeinheit von der Achse weggerichtet sind, wieder aus dem Gefäß entfernt wird. Im Anschluss daran kann die Reaktionsgefäßeinheit erneut durch die Beladungs- und Entladungseinrichtung unter der Pipettiereinrichtung platziert werden, um die Reaktionsgefäßeinheit erneut zu füllen und anschließend wieder mittels Zentrifugation zu entleeren. Solch ein Verfahren eignet sich insbesondere wenn mehrere gleiche Schritte, z. B. Waschschritte, durchgeführt werden müssen. Hierbei wird dann die Reaktionsgefäßeinheit mit einer Waschlösung befüllt, anschließend mittels Zentrifugation entleert. Dieser Vorgang kann je nach Bedarf mehrmals wiederholt werden.

Die Pipettiereinrichtung ist vorzugsweise mit mehreren fluidischen Eingängen verbunden. Vorzugsweise sind zumindest drei, insbesondere zumindest fünf und ganz bevorzugt zumindest sieben fluidische Eingänge vorgesehen. Ein jeder fluidische Eingang ist mit einem separaten Steuerventil versehen, das von einer zentralen Steuereinrichtung individuell ansteuerbar ist. Hierdurch ist es möglich, komplexe Waschvorgänge vollautomatisch durchzuführen, wobei unterschiedliche Reagenzien aufeinanderfolgende den Reaktionsgefäßeinheiten zugeführt werden.

Dadurch dass die Reaktionsgefäßeinheit durch eine Beladungs- und Entladungseinrichtung, wie hierin beschrieben, mit sehr hoher Präzision gesteuert werden kann, und deshalb in ihrer Position sehr präzise in Bezug zu einer Pipettiereinrichtung platziert werden kann, eignet sich die vorliegende Erfindung vor allem für Versuchs- und Testanordnungen, welche mit Reaktionsgefäßeinheiten durchgeführt werden, die Reaktionsgefäße mit sehr kleinem Durchmesser erfordern. Insbesondere eignet sich eine Zentrifuge der vorliegenden Erfindung für Mikrotiterplatten, welche z. B. 96, bevorzugt 384, stärker bevorzugt 1.536 Reaktionsgefäße bzw. Wells aufweisen.

Bei einer Mikrotiterplatte mit 10536 Reaktionsgefäßen beträgt der Abstand zwei benachbarter Reaktionsgefäße 2,25 mm. Damit die Reaktionsgefäße präzise beispielsweise gegenüber einer Pipettiereinheit, positioniert werden können, ist es zweckmäßig, dass der Linearantrieb mit einer Genauigkeit von zumindest 0,2 mm, vorzugsweise zumindest 0,1 mm die Verschiebestange und damit die Reaktionsgefäßeinheit bewegt. Der Linearantrieb ist deshalb vorzugsweise als ein Linearantrieb ausgebildet, der eine Drehbewegung in eine Linearbewegung mittels eines kämmenden bzw. formschlüssigen Eingriffs umsetzt. Der Linearantrieb kann jedoch auch ein entsprechend präzise steuerbarer Linearmotor sein. Derartige Linearmotoren benötigen in der Regel jedoch zusätzliche Sensoren, weshalb grundsätzlich ein mechanischer Linearantrieb mit kämmender In-Eingriffnahme bevorzugt wird.

Durch die Möglichkeit, sehr kleine Reaktionsgefäße präzise zu Befüllen, wird das Risiko der Kontamination, des Überschwappens, sowie des Flüssigkeitsverlustes durch Danebenpipettieren sehr stark verringert oder sogar vollständig ausgeschlossen.

Des Weiteren kann die Zentrifuge gemäß der vorliegenden Erfindung als vorteilhaft erachtet werden, da sich die Verschiebestange der Beladungs- und Entladungseinrichtung während des Zentrifugiervorgangs nicht im Bereich des Rotorraums befindet, welcher vom Rotor bei einer Umdrehung beansprucht wird. Dies bedeutet, dass insbesondere beim Entleeren der Reaktionsgefäßeinheit durch Zentrifugieren der entweichende Inhalt nicht mit der Beladungs- und Entladungseinrichtung, insbesondere nicht mit der Verschiebestange in Kontakt kommen kann. Dadurch wird die Gefahr einer Kontamination innerhalb des Rotorraums aufgrund einer kontaminierten Verschiebestange, gering gehalten.

Die Zentrifuge der vorliegenden Erfindung kann an einem freien Ende der Verschiebestange, welches sich in den Rotorraum erstreckt, ein Kopplungselement aufweisen, wobei das Kopplungselement zum wiederverbindbaren Verbinden der Verschiebestange mit einer Reaktionsgefäßeinheit oder eine Trägereinheit für eine Reaktionsgefäßeinheit ausgebildet ist.

Durch ein Kopplungselement an der Verschiebestange, womit ein wiederholtes Koppeln und Entkoppeln mit einer Reaktionsgefäßeinheit oder einer Trägereinheit für eine Reaktionsgefäßeinheit ermöglicht wird, kann die Reaktionsgefäßeinheit bzw. die Trägereinheit von der Verschiebestange "gegriffen" werden und an gewünschter Position wieder entkoppelt werden. Durch das Entkoppeln wird es ermöglicht, dass die Verschiebestange den Bereich des Rotorraums, welcher von dem Rotor bei einer Umdrehung beansprucht wird, wieder verlassen kann und somit den oben beschriebenen Risiken der Kontamination gar nicht oder zu einem stark verringerten Maße ausgesetzt ist. Das Kopplungselement der vorliegenden Erfindung kann ein Rastelement aufweisen, welches mit einem an der Reaktionsgefäßeinheit oder an der Trägereinheit vorgesehenen Gegenrastelement eingreifen kann, wobei zumindest das Rastelement oder das Gegenrastelemente elastisch gelagert ist.

Durch solch ein System mit einem Rast- und einem Gegenrastelement wird ein sicheres und stabiles Koppeln der Reaktionsgefäßeinheit bzw. der Trägereinheit für eine Reaktionsgefäßeinheit sichergestellt. Dadurch, dass das Rastelement bündig mit dem Gegenrastelement eingreift, wird verhindert, dass sich die Reaktionsgefäßeinheit oder die Trägereinheit während des Beladungs- und oder Entladungsvorgangs in eine andere Richtung als entlang der horizontalen Achse der Verschiebestange bewegt. Dadurch wird wiederum sichergestellt, dass die Reaktionsgefäßeinheit präzise positioniert und gegebenenfalls exakt mit einer Pipettiereinheit befüllt werden kann.

Sowohl das Rastelement als auch das Gegenrastelement können elastisch gelagert sein. Ebenfalls kann nur das Rast- bzw. nur das Gegenrastelement elastisch gelagert sein. Durch die elastische Lagerung wird ein "flüssiges Koppeln" und Entkoppeln gewährleistet, wodurch ein eventuelles Hin-und-Her-Rutschen bzw. Anstoßen der Reaktionsgefäßeinheit verhindert werden kann. Dadurch wird vermieden, dass möglicherweise Inhalte aus einem Reaktionsgefäß austreten und entweder verloren gehen oder in ein benachbartes Reaktionsgefäß gelangen.

Gemäß einer Ausführungsform der vorliegenden Erfindung ist das Gegenrastelement der Reaktionsgefäßeinheit oder der Trägereinheit elastisch gelagert und ist mit einem Verriegelungsbügel gekoppelt, so dass der Verriegelungsbügel zwischen zwei Stellungen schwenkbar ist, wobei eine Entriegelungsstellung eingenommen wird, wenn das Rastelement und das Gegenrastelement miteinander verrastet sind und eine Verriegelungseinstellung eingenommen wird, wenn das Rastelement und das Gegenrastelement voneinander getrennt sind, wobei der Verriegelungsbügel ein Verriegelungselement aufweist, das in einer Verriegelungsstellung mit einem korrespondierenden Gegenverriegelungselement eines Rotors eingreifen kann.

Durch die elastische Lagerung des Gegenrastelementes kann wie oben bereits beschrieben der Vorgang des Koppelns und Entkoppelns flüssig, d. h. ohne ruckartige Bewegungen durchgeführt werden, wodurch ein starkes Rütteln der Reaktionsgefäßeinheit oder der Trägereinheit vermieden werden kann.

Durch die Kopplung des elastisch gelagerten Gegenrastelements mit einem Verriegelungsbügel wird außerdem sichergestellt, dass nach der Entkopplung der Verschiebestange von der Reaktionsgefäßeinheit bzw. der Trägereinheit diese nicht mehr im Rotor verschoben werden kann. Durch das Eingreifen des Verriegelungsbügels mit einem korrespondierenden Gegenverriegelungselement an einer Rotoreinheit wird die Reaktionsgefäßeinheit oder die Trägereinheit derart mit der Rotoreinheit der Zentrifuge verbunden, dass ein Herausnehmen, Verschieben, Verrutschen oder dergleichen nicht ohne Lösen der Verriegelung möglich ist. Somit ist die Reaktionsgefäßeinheit oder die Trägereinheit nachdem deren Rastelement von dem Gegenrastelement an der Verschiebestange getrennt wurde, durch das Eingreifen des Verriegelungselementes mit einem korrespondierenden Gegenverriegelungselement an der Rotoreinheit, an zumindest dieser Stelle, fixiert.

Vorzugsweise weist die Verschiebestange eine glatte Oberfläche auf. Eine glatte Oberfläche erlaubt eine einfache und gründliche Reinigung der Verschiebestange. Bei einer glatten Oberfläche ist die Gefahr gering, dass sich unerwünschte Verunreinigungen dauerhaft ablagern. Zudem kann eine glatte Oberfläche besonders zuverlässig mit einer Dichtungseinrichtung gegenüber außerhalb des Rotorraums liegenden Bereichen abgedichtet werden. Dadurch kann zumindest teilweise verhindert werden, dass Ablagerungen auf der Verschiebestange aus dem Rotorraum hinaus getragen werden.

Die Verschiebestange der vorliegenden Erfindung kann hohl sein und an dem vom Rotorraum rückweisenden hinteren Ende offen ausgebildet sein. Eine koaxial zur Verschiebestange vorgesehene Gewindestange kann mit einem mit der Verschiebestange verbundenen Gewinde sich in kämmenden In-Eingriff befinden, so dass durch eine relative Drehbewegung der Gewindestange bezüglich der Verschiebstange eine Translationsbewegung der Verschiebestange ausgeführt wird, wobei die Gewindestange am hinteren Ende in die Verschiebestange eintauchen kann.

Die Verschiebestange ist vorzugsweise drehfest geführt, so dass durch eine Drehung der Gewindestange die relative Drehbewegung erzeugt wird. Grundsätzlich ist es auch möglich, die Verschiebestange zu drehen, wobei dann die Gewindestange ortsfest angeordnet sein kann. Wird eine sich drehende Verschiebestange vorgesehen, dann ist es zweckmäßig ein Kopplungselement vorzusehen, dass unabhängig von der Drehposition wirken kann. Ein solches Kopplungselement kann beispielsweise ein rotationssymmetrisches Rastelement oder ein Kopplungsmagnet sein.

Dadurch, dass die Verschiebestange durch eine Drehbewegung der Gewindestange bewegt wird, ist es möglich, die an der Verschiebestange gekoppelte Reaktionsgefäßeinheit oder Trägereinheit präzise zu positionieren und so insbesondere ihre Position bezüglich einer Pipettiereinheit exakt zu steuern. Durch dieses System kann eine rotatorische Bewegung in eine translatorische Bewegung umgewandelt werden, wodurch es möglich ist, die Verschiebestange bzw. die darin gekoppelte Reaktionsgefäßeinheit oder Trägereinheit für eine vordefinierte Strecke zu bewegen bzw. in eine vordefinierte Position zu bringen. Zur Erzielung einer besonders hohen Genauigkeit kann ein Kugelumlaufspindel verwendet werden, welche von einer Mutter umschlossen ist, in der Kugeln in einem geschlossenen System umlaufen.

Da die Gewindestange an dem hinteren Ende in die Verschiebestange eintauchen kann, ist es möglich, die Größe der Beladungs- und Entladungseinrichtung gering zu halten. Die Gewindestange kann im eingefahrenen Zustand nahezu vollständig in der Verschiebestange aufgenommen werden. Die maximale Länge der Verschiebestange zusammen mit der Gewindestange ergibt sich dann, wenn die Verschiebestange vollständig ausgefahren ist, d. h. wenn sich die Verschiebestange durch den Rotorraum erstreckt. Dies ist zum Beispiel der Fall, wenn eine Reaktionsgefäßeinheit oder Trägereinheit außerhalb des Rotorraums entweder an die Verschiebestange angekoppelt oder abgekoppelt wird. Hierbei ist die Gewindestange maximal aus der Verschiebestange herausgedreht.

Vorzugsweise ist der Rotorraum der Zentrifuge von einem Gehäuse umschlossen. Die Verschiebestange wird durch eine Öffnung in einer Gehäusewand geführt werden, wobei im Bereich der Öffnung ein Dichtungselement vorgesehen ist, das die Verschiebestange gegenüber der Gehäusewandung abdichtet. Die Verschiebestange erstreckt sich somit in den Rotorraum und den Antriebseinheit.

Durch das Dichtungselement wird der Rotorraum von dem Antriebseinheit der Verschiebestange abgetrennt. So kann verhindert werden, dass Inhalte, welche sich in dem Rotorraum befinden, insbesondere Inhalte, welche aus den Reaktionsgefäßen durch Zentrifugation entfernt wurden, den Rotorraum in den Antriebseinheit verlassen. Dadurch wird die Gefahr einer Kontamination mit Inhaltsstoffen der Reaktionsgefäße außerhalb des Rotorraums stark verringert bzw. komplett vermieden.

Das Dichtungselement sorgt bei der Bewegung der Verschiebestange dafür, dass z. B. Flüssigkeit, welche sich eventuell auf der Verschiebestange befindet, von der Verschiebestange abgestriffen wird und somit nicht von dem Rotorraum in den Bereich des Antriebs verschleppt wird. Vorteilhaft ist insbesondere eine solche Ausführungsform, bei der die Verschiebestange eine glatte Oberfläche besitzt, da dadurch das Dichtungselement bündig die Verschiebestange umschließen kann. Dies erlaubt ein effektives Abstreifen von Materialien auf der Verschiebestange.

Während des Zentrifugationsprozesses selber ist die Verschiebestange möglichst vollständig in die Öffnung der Gehäusewand eingefahren. Dadurch soll vermieden werden, dass Inhalt, welcher während der Zentrifugation aus den Reaktionsgefäßen entfernt wird, möglichst nicht mit der Verschiebestange in Kontakt kommt. Sollte dies dennoch der Fall sein, so kann dieser durch das eng anliegende Dichtungselement abgestriffen werden.

Die Zentrifuge der vorliegenden Erfindung weist weiterhin eine Detektionseinrichtung auf, um die Position der Verschiebestange in Bewegungsrichtung zu bestimmen.

Durch eine entsprechende Detektionseinrichtung wird gewährleistet, dass die Position der Verschiebestange in Bewegungsrichtung zu jeder Zeit präzise festgestellt werden kann und die Reaktionsgefäßeinheit oder Trägereinheit präzise an die gewünschte Stelle bewegt werden kann.

In einer bevorzugten Ausführungsform der vorliegenden Erfindung umfasst die Zentrifuge eine horizontale Rotationsachse, um welche der Rotor im Betrieb der Zentrifuge rotiert.

Eine horizontale Rotationsachse bedeutet, dass die Rotationsachse parallel zu einer Bodenwandung des Gehäuses des Rotorraums verläuft, so dass bei zweckbestimmter Anordnung der Zentrifuge auf einem horizontalen Untergrund die Rotationsachse horizontal verläuft. Bei einer solchen Zentrifuge mit horizontaler Rotationsachse können Reaktionsgefäßeinheiten, wie zum Beispiel Mikrotiterplatten, in horizontaler Richtung in den Rotor eingeschoben werden, wobei das oder die Reaktionsgefäße jeweils mit ihrer Öffnung nach oben weisend angeordnet sind. Dies erlaubt das Zu- und Abführen der Reaktionsgefäßeinheiten, wobei die Reaktionsgefäße Flüssigkeit enthalten und offen sind. Hierdurch kann die Zentrifuge einfach an bestehende automatische Systeme, insbesondere Robotersysteme bzw. Laborsysteme gekoppelt werden und in einen automatisch ablaufenden Prozess integriert werden.

Ein weiterer Aspekt der vorliegenden Erfindung betrifft die Integration einer Vorrichtung zum optischen Detektieren von Assays, insbesondere homogene Assays.

Eine Vielzahl von Experimenten wird durch die Detektion optischer Signale ausgewertet und analysiert. Die Verfahren zur optischen Detektion können auf unterschiedliche Art und Weisen durchgeführt werden. So können optische Signale durch die Erzeugung von Fluoreszenz, durch Licht oder dergleichen detektiert werden. Einige Reaktionen, die verwendet werden, um optische Signale zu erzeugen, laufen sehr schnell ab, weshalb eine direkte Messung nach Zugabe der entsprechenden Reagenzien wünschenswert sein kann.

Zur optischen Detektion ist vorzugsweise eine Detektionseinrichtung vorgesehen, welche zumindest einen optischen Sensor (= eine Kamera) und vorzugsweise eine Lichtquelle umfasst. Der optische Sensor kann als Zeilensensor oder als Flächensensor ausgebildet sein.

Die optische Detektionseinrichtung ist vorzugsweise mit ihrer Blickrichtung etwa vertikal nach unten gerichtet, so dass der Inhalt von oben offenen Reaktionsgefäßen erfasst werden kann. Die Blickrichtung kann exakt vertikal oder etwas gegenüber einer Vertikalen geneigt ausgerichtet sein.

Die optische Detektionseinrichtung ist vorzugsweise derart ausgebildet und angeordnet, dass sie benachbart zum Rotorraum im Bewegungsbereich der Reaktionsgefäßeinheit diese zellenförmig abtasten kann, wobei eine Abtastzeile etwa senkrecht zur Bewegungsrichtung die Reaktionsgefäßeinheit bzw. Trägereinheit ausgerichtet ist.

Die optische Detektionseinheit kann eine oder mehrere Lichtquellen aufweisen. Sind mehrere Lichtquellen vorhanden, dann sind sie vorzugsweise individuell ansteuerbar. Die Lichtquellen weisen vorzugsweise Leuchtdioden als Leuchtmittel auf.

Eine solche Lichtquelle kann auf der gleichen Seite wie der optische Sensor bzgl. eines Bewegungsweges einer Reaktionsgefäßeinheit vorgesehen sein, um eine Hellfeld- und/oder eine Dunkelfeldbeleuchtung auszubilden. Eine solche Lichtquelle kann auch zur Durchleuchtung von Reaktionsgefäßen auf der gegenüberliegenden Seite des Bewegungsweges einer Reaktionsgefäßeinheit vorgesehen sein.

Die optische Detektionseinrichtung kann einen Farbsensor bzw. eine Farbkamera aufweisen, mit welcher die Farbe der Inhalte der Reaktionsgefäße die Reaktionsgefäßeinheit detektierbar ist.

Vorzugsweise ist die optische Detektionseinrichtung zum Detektieren der Füllhöhe der einzelnen Reaktionsgefäße ausgebildet. Die Füllhöhe kann beispielsweise mittels eines optischen Triangulationsverfahrens, insbesondere eines Laser-Triangulationsverfahrens, abgetastet werden. Es können auch andere Verfahren zur optischen 3D-Abtastung vorgesehen sein, wie z.B. Stereoskopie, Deflektometrie oder Weißlicht-Interferometrie. Verfahren zur 3D-Abtastung sind beispielsweise aus der WO 2011/060769 A1, DE 10 2009 040 081 A1, DE 10 2008 036 275 A1, DE 197 21 688 A1, DE 103 09 544 A1, DE 43 01 538 A1, DE 195 32 767 C2 bzw. DE 44 39 307 C2 bekannt. Diese und weitere optische Verfahren zur 3D-Abtastung können dazu verwendet werden, den Füllstand eines oder mehrerer Reaktionsgefäße gleichzeitig abzutasten. Auf diese Dokumente wird deshalb vollinhaltlich Bezug genommen.

Mit einer optischen Abtastung kann bei Verwendung einer Farbkamera auch die Farbe der Füllung der Reaktionsgefäße analysiert werden. Dies stellt eine spektrale Analyse der Probe dar.

Die optische Detektionseinrichtung ist vorzugsweise parallel und benachbart zu einer Reihe von Pipettierdüsen einer Pipettiereinrichtung angeordnet, so dass während oder unmittelbar nach dem Pipettieren die einzelnen Reaktionsgefäße, in welche mittels der Pipettierdüsen eine Lösung zugeführt wird, optisch abgetastet werden können. Hierdurch kann das Befüllen der einzelnen Reaktionsgefäße präzise erfasst und bei der weiteren Be- und Verarbeitung berücksichtigt werden. Beispielsweise kann die Konzentration bestimmter Zusammensetzungen von der zu pipettierten Menge an Lösungsmittel abhängen, wobei unterschiedliche Konzentrationen grundsätzlich zulässig sind, jedoch bekannt sein müssen. Durch die Detektion des Füllstandes kann dann auf die Konzentration geschlossen werden und diese bei der nachfolgenden Auswertung berücksichtigt werden. Dies ist besonders bei sehr kleinen Reaktionsgefäßen zweckmäßig, bei welchen eine geringfügig abweichende Füllmenge einen erheblichen Unterschied im Füllstand und dementsprechend auch in der Konzentration verursachen kann.

Weiterhin kann eine derartige optische Detektionseinrichtung zum Detektieren der Position einer Reaktionsgefäßeinheit bzw. einer Trägereinheit ausgebildet sein. Die mit der optischen Detektionseinrichtung ermittelte Position der Reaktionsgefäße bzw. Trägereinheit kann in einer geschlossenen Regelschleife zur Steuerung eines Antriebs zum Bewegen der Trägereinheit bzw. der Reaktionsgefäßeinheit verwendet werden. Hierdurch ist es auch möglich, externe Antriebsmechanismen, wie zum Beispiel einen Roboterarm zu verwenden, dessen Steuerung an die optische Detektionseinrichtung der Zentrifuge gekoppelt ist.

Die Detektion der Position der Reaktionsgefäßeinheit erlaubt auch eine automatische Steuerung des Pipettierens von Flüssigkeiten in die einzelnen Reaktionsgefäße, wobei die Position der Reaktionsgefäße relativ zu Pipettierdüsen erfasst und ausgerichtet wird. So ist es beispielsweise möglich, mehrere Reihen von Reaktionsgefäßen aufeinanderfolgend mit Flüssigkeit zu füllen.

Mit der optischen Detektionseinrichtung kann auch automatisch der Typ der Reaktionsgefäßeinheit (z.B. 96, 384 oder 1536 Reaktionsgefäße) erkannt werden. Dementsprechend kann das Pipettieren gesteuert werden.

Die Zentrifuge kann eine Auswerteeinrichtung aufweisen, mit welcher die mit der optischen Detektionseinrichtung erhaltenen Signale automatisch nach folgenden Parametern ausgewertet werden:
- Farbe des Inhalts zumindest eines Reaktionsgefäßes der Reaktionsgefäßeinheit,
- Füllstand zumindest eines Reaktionsgefäßes der Reaktionsgefäßeinheit,
- Position der Reaktionsgefäßeinheit,
- Typ der Reaktionsgefäßeinheit.

Die so erfassten Werte dieser Parameter können zur automatischen Steuerung von Prozessen zum Bearbeiten von in den Reaktionsgefäßen der Reaktionsgefäßeinheiten enthaltenen Proben verwendet werden. So können folgende Schritte automatisch gesteuert in beliebiger Reihenfolge einfach oder mehrfach wiederholt ausgeführt werden:
- Pipettieren
- Spektralanalyse
- Reinigen

Ein weiterer Aspekt der vorliegenden Offenbarung ist eine Zentrifuge wie oben beschrieben, welche an Stelle des beschriebenen Be- und Entladungsmechanismus mittels einem Roboterarm be- und entladen wird.

Hierfür weist der Roboterarm ein Kopplungselement auf, womit eine Reaktionsgefäßeinheit bzw. eine Trägereinheit für eine Reaktionsgefäßeinheit an den Robotergreifarm gekoppelt werden kann. Der Robotergreifarm kann dann nach dem Ankoppeln der Reaktionsgefäßeinheit bzw. der Trägereinheit dieses entweder aus dem Rotorraum herausziehen oder den Rotorraum damit beladen. Mittels entsprechenden Steuer- und Messeinrichtungen kann die Reaktionsgefäßeinheit bzw. die Trägereinheit für eine Reaktionsgefäßeinheit in eine vordefinierte Position gebracht werden. So ist auch die Positionierung der Reaktionsgefäßeinheit bzw. der Trägereinheit relativ zu einer Pipettiervorrichtung möglich.

Die Reaktionsgefäßeinheit bzw. Trägereinheit von dem Robotergreifarm kann so positioniert werden, dass zunächst das Reaktionsgefäß mittels der Pipettiervorrichtung befüllt wird bevor es anschließend mittels des Robotergreifarms in den Rotorraum der Zentrifuge bewegt wird.

Handelt es sich bei der Reaktionsgefäßeinheit um eine Mikrotiterplatte, kann zunächst durch exakte Positionierung der Reaktionsgefäßeinheit mittels dem Robotergreifarm eine Reihe bzw. Spalte an Wells nach der anderen befüllt werden bevor dann die komplett befüllte Platte mittels dem Robotergreifarm in den Rotorraum geschoben wird. Nach Beendigung des Zentrifugationsvorgangs wird die Platte wieder mittels dem Greifarm aus dem Rotorraum gezogen und kann gegebenenfalls erneut Reihe für Reihe bzw. Spalte für Spalte befüllt werden oder je nach Bedarf weitertransportiert werden.

Die Steuer- und Messeinrichtung ist vorzugsweise derart ausgebildet, dass sie die Position der Reaktionsgefäßeinheit bzw. der Trägereinheit detektiert und mittels einer geschlossenen Regelschleife die Bewegung des Robotergreifarms derart steuert, dass die Reaktionsgefäßeinheit bzw. die Trägereinheit an der gewünschten Position positioniert wird. Hierzu umfasst die Steuer- und Messeinrichtung vorzugsweise eine optische Detektionseinrichtung, wie sie oben erläutert ist.

Durch die Verwendung eines Linearantriebes, insbesondere eines Linearantriebes, der eine drehende Bewegung in eine Linearbewegung durch einen formschlüssigen bzw. kämmenden In-Eingriff umsetzt, kann der Linearantrieb mit der Steuereinrichtung so gesteuert werden, dass er die Position der starren Verschiebestange so präzise einstellt, dass die Position einer damit verbundenen Reaktionsgefäßeinheit nicht gemessen werden muss, sondern durch die Position der Verschiebestange so exakt bestimmt ist, dass weitere Komponenten, wie z.B. die Pipettiereinrichtung oder der Roboterarm, auf die Reaktionsgefäßeinheit einwirken können, ohne dass deren Position separat gemessen wird (absolute Positionierung).

Dies vereinfacht den Aufbau der Zentrifuge erheblich, da keine Sensoren und Steuerelemente zum Detektieren der Reaktionsgefäßeinheit bzw. entsprechender Träger im Bereich des Rotorraums bzw. im Bereich des Balkons bzw. des Be- und Entladebereichs der Zentrifuge vorgesehen sein müssen. Zudem vereinfacht dies auch die Kopplung der Zentrifuge an weitere Geräte zur Automatisation des Arbeitsablaufes zur Prozessierung von in einer Reaktionsgefäßeinheit enthaltenen Substanzen. Bspw. kann die Zentrifuge mit einem Roboterarm derart gekoppelt werden, dass die Steuereinrichtung der Zentrifuge bei der Übergabe der Reaktionsgefäßeinheit von der Zentrifuge an den Roboterarm die durch den Linearantrieb vorgegebene Position an eine Steuereinrichtung des Roboterarms übergibt. Der Roboterarm kann dann an dieser Position die Reaktionsgefäßeinheit greifen.

Zum Austausch einer Reaktionsgefäßeinheit zwischen der Zentrifuge und einer Transporteinrichtung für derartige Reaktionsgefäßeinheiten, wie z. B. einen Roboterarm, kann die Steuereinrichtung der Zentrifuge derart ausgebildet sein, dass die Verschiebestange für einen solchen Austauschvorgang immer in exakt derselben Position positioniert wird, die der Transporteinrichtung bekannt ist, so dass die Reaktionsgefäßeinheit von der Transporteinrichtung zur Kopplung mit der Verschiebestange entsprechend positioniert werden kann oder an dieser Position entsprechend aufgenommen werden kann.

Ein weiterer Vorteil der starren Verschiebestange liegt darin, dass das freie Ende der Verschiebestange sehr präzise bezüglich Höhe und seitlicher Auslenkung im Vergleich zu herkömmlichen flexiblen Elementen angeordnet ist, wodurch eine automatische Kopplung mit einer Trägereinheit oder ein Reaktionsgefäßeinheit einfach ausführbar ist. Bei einem flexiblen Verschiebelement besteht die Gefahr, dass das freie Ende je nach Durchbiegung in einer unterschiedlichen Höhe angeordnet ist, sodass ein automatisches Ankoppeln einer Trägereinheit oder Reaktionsgefäßeinheit oftmals nicht möglich ist. Durch die Verwendung einer starren Verschiebestange kann eine beliebige Trägereinheit bzw. ein beliebiger Träger in einer vorbestimmten Position angeordnet und an die Verschiebestange gekoppelt werden. Das entsprechende Kopplungselement an der Trägereinheit oder am Träger oder andere Reaktionsgefäßeinheit müssen nur in einer vorbestimmten Höhe angeordnet sein, die mit einem entsprechenden Kopplungselement am freien Ende der Verschiebestange zusammenwirkt. Hierdurch ist es möglich in einem automatisierten System unterschiedliche Träger, Trägereinheiten bzw. Reaktionsgefäßeinheiten an die Verschiebestange automatisch zu koppeln. Dies kann einfach realisiert werden, indem ein entsprechendes Greifelement, wie z. B. ein Roboterarm, lediglich den Träger bzw. die Trägereinheit bzw. die Reaktionsgefäßeinheit austauscht. Dadurch können in einem automatischen System unterschiedliche Formate an Reaktionsgefäßeinheiten automatisch ausgetauscht werden. Hierbei ist es nicht notwendig einen separaten Sensor, beispielsweise einen optischen Sensor vorzusehen, der die Position des freien Endes detektiert und so die Kopplung mit einem weiteren Träger bzw. Trägereinheit bzw. einer weiteren Reaktionsgefäßeinheit steuert.

Durch den automatischen Austausch unterschiedlicher Träger bzw. Trägereinheiten ist es auch möglich Reaktionsgefäßeinheiten bzw. Mikrotiterplatten zu verwenden, die einem Spezialformat entsprechen. Die meisten Mikrotiterplatten entsprechen dem sogenannten SBS-Format. Für Spezialanwendungen gibt es jedoch auch Spezialformate, welche eine andere Anordnung von Reaktionsgefäßen aufweist. Die Spezialformate können auch einen anderen Grundriss oder eine andere Höhe aufweisen. Derartige Abweichungen von einem Standardformat, insbesondere dem SBS-Format können beispielsweise durch Verwendung entsprechender Träger bzw. Trägereinheiten ausgeglichen werden. Um unterschiedliche Höhen von Mikrotiterplatten verwenden zu können, können beispielsweise unterschiedlich hohe Trägereinheiten eingesetzt werden.

Bei kleinen Reaktionsgefäßen können diese mit einer Lösung gefüllt mit ihrer Öffnung nach unten gerichtet angeordnet werden, ohne dass die Lösung aus den Reaktionsgefäßen entweicht. Die Lösung wird durch Kapillarkräfte in den Reaktionsgefäßen enthalten. Dies gilt v. a. für Mikrotiterplatten mit 1536 Reaktionsgefäßen. Dies kann jedoch auch bei Mikrotiterplatten mit 96 oder 384 Reaktionsgefäßen der Fall sein. Dies hängt davon ab, wie die einzelnen Reaktionsgefäße geformt sind und wie deren Oberfläche ausgebildet ist.

Eine Zentrifuge weist deshalb vorzugsweise einen Rotor auf, welcher eine Reaktionsgefäßeinheit aufnehmen kann, sodass die Reaktionsgefäße beim Einführen in die Zentrifuge mit Ihren Öffnungen sowohl nach unten weisend als auch nach oben weisend angeordnet sein können. Hierdurch ist es möglich, dass die Reaktionsgefäßeinheit in den Rotor derart eingesetzt werden kann, dass die Öffnungen der Reaktionsgefäße entweder zur Rotationsachse weisen oder bezüglich der Rotationsachse des Rotors nach außen gerichtet sind. Die Zentrifuge kann somit zum Zentrifugieren von Lösungen in den Reaktionsgefäßen (die Öffnungen weisen zur Reaktionsachse) als auch zum Entleeren der Reaktionsgefäße (die Öffnungen der Reaktionsgefäße weisen weg von der Rotationsachse) verwendet werden. Der Aufnahmebereich des Rotors kann deshalb derart ausgebildet sein, dass eine Reaktionsgefäßeinheit in den Rotor formschlüssig in beiden Ausrichtungen einschiebbar ist, bei welchen die Öffnungen entweder zur Rotationsachse weisen oder von der Rotationsachse weggerichtet sind.

Vorzugsweise ist die Zentrifuge mit einer Einrichtung kombiniert, welche die Reaktionsgefäßeinheiten derart wenden kann, dass sie mit den Öffnungen nach unten oder nach oben weisend in die Zentrifuge einführbar sind. Eine solche Einrichtung kann beispielsweise ein Roboterarm sein, der dementsprechend von einer Steuereinrichtung angesteuert wird.

Die oben beschriebenen unterschiedlichen Aspekte können auch in Kombination angewandt werden.

Die Erfindung wird nachfolgend anhand der beigefügten Zeichnungen beispielhaft näher erläutert. Die Zeichnungen zeigen in:
- Figur 1: eine perspektivische Ansicht einer Zentrifuge ohne Gehäuse von schräg oben,
- Figur 2: eine Verschiebestange mit einem zugehörigen Antrieb in perspektivischer Ansicht,
- Figur 3: einen Querschnitt durch ein Kopplungselement, welches sich am Ende einer Verschiebestange befindet und durch ein Gegenrastelement mit einer Trägereinheit,
- Figur 4: eine Trägereinheit für eine Reaktionsgefäßeinheit mit einem Gegenrastelement in perspektivischer Ansicht,
- Figur 5: das mit einem Gegenrastelement gemäß Figur 4 gekoppelte Kopplungselement aus Figur 3,
- Figur 6: eine Verschiebeeinheit gemäß Figur 2 mit daran gekoppelter Trägereinheit in perspektivischer Ansicht,
- Figur 7: die Verschiebeeinheit aus Figur 6 im Querschnitt,
- Figur 8: einen Querschnitt durch ein Kopplungselement, welches mit seinem Rastelement mit einem Gegenrastelement an einer Trägereinheit eingreift,
- Figur 9: einen Querschnitt durch eine Trägereinheit und das dazugehörige Gegenrastelement, in welches das Rastelement des Kopplungselementes der Verschiebestange eingreift,
- Figur 10: einen Ausschnitt der Zentrifuge im Querschnitt mit einer Trägereinheit und einer Verschiebestange, deren Kopplungselement nicht in das Gegenrastelement der Trägereinheit eingreift,
- Figur 11: einen Ausschnitt der Zentrifuge im Querschnitt mit einer Trägereinheit und einer Verschiebestange, deren Kopplungselement sich nach dem Eingreifen in das Gegenrastelement gelöst hat und die Trägereinheit durch einen Verriegelungsbügel an dem Rotor gehalten wird,
- Figur 12: eine Verschiebeeinheit gemäß Figur 6 im Längsschnitt,
- Figur 13: einen Abschnitt einer Verschiebestange, wobei das Kopplungselement einen Haken aufweist, welcher in eine entsprechendes Gegenstück an einer Trägereinheit eingreift,
- Figur 14: einen Haken eines Kopplungselementes einer Verschiebestange, welche um 90° Grad gedreht wurde, um so in ein entsprechendes Gegenstück einer Trägereinheit einzugreifen,
- Figur 15: einen Querschnitt durch ein Kopplungselement einer Verschiebestange, wobei das Rastelement des Kopplungselementes als großer Zapfen ausgebildet ist und in einem Gegenrastelement einer Trägereinheit eingreift.

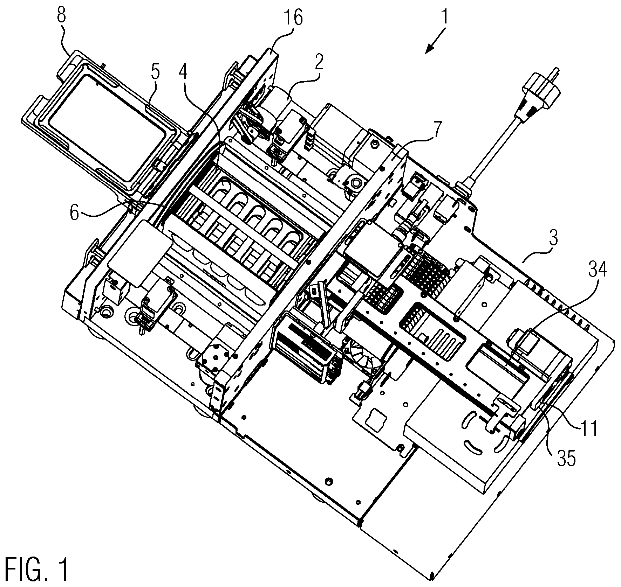

Im Folgenden wird ein Ausführungsbeispiel einer erfindungsgemäßen Zentrifuge 1 beispielhaft näher erläutert. Diese Zentrifuge 1 umfasst einen Rotorraum 2, in welchem sich der Rotor 4 befindet, einen Antriebseinheit 3, in welchem ein Linearantrieb 11, sowie eine Verschiebestange 6 angeordnet ist. Mit der Verschiebestange 6 kann eine Reaktionsgefäßeinheit oder eine Trägereinheit 5 für eine Reaktionsgefäßeinheit in den Rotorraum 2 gezogen oder aus dem Rotorraum hinaus auf einen Balkon 8 geschoben werden (Figur 1).

In dem Rotorraum 2 befindet sich der mit zumindest einer Reaktionsgefäßeinheit beladbare Rotor 4, welcher sich um eine Rotationsachse drehen kann. Bevorzugt dreht sich der Rotor 4 um eine horizontale Rotationsachse.

Der Rotorraum 2 ist durch ein Gehäuse von der äußeren Umgebung sowie durch eine Trennwand 7 von der Antriebseinheit 3 räumlich abgetrennt. In der Antriebseinheit 3 befindet sich ein Basisgestell 15. Dieses Basisgestell 15 erstreckt sich über den Bereich außerhalb des Rotorraums 2, in dem die Verschiebestange 6 aufgenommen werden kann.

Das Basisgestell 15 dient zur Halterung der zum linearen Antreiben der Verschiebestange 6 vorgegebenen Elemente.

Das Basisgestell 15 umfasst eine Führungsschiene 28, welche sich von der Trennwand 7 in den Bereich der Antriebseinheit 3 erstreckt und deren Länge in etwa der Länge der Verschiebestange 6 entspricht. Die Führungsschiene 28 ist parallel zur Verschiebestange 6 angeordnet. An dem von der Trennwand 7 entfernten Ende der Führungsstange 28 ist ein Halteelement 29 vorgesehen, in dem eine Gewindestange 9 drehbar aber axial fixiert gelagert ist. Die Gewindestange 9 erstreckt sich vom Halteelement 29 in Richtung zur Verschiebestange 6, welche hohl ausgebildet ist und an ihrem rückwärtigen, d. h. zur Gewindestange 9 weisenden Ende, offen ist. Die Gewindestange 9 befindet sich mit ihrem vorderen, freien Ende in der Verschiebestange 6. Die Gewindestange 9 und die Verschiebestange 6 sind somit zueinander fluchtend angeordnet.

Im vorliegenden Ausführungsbeispiel ist das rückwärtige Ende der Verschiebestange 6 mit einem Schlitten 30 gekoppelt, welcher durch die Führungsschiene 28 geführt wird. Der Schlitten 30 hält die Verschiebestange 6 drehfest in der Antriebseinheit 3. Der Schlitten 30 weist eine Mutter 31 auf, in welcher die Gewindestange eingreift. Am Schlitten 30 ist ein Bügel 32 angeordnet, der zusammen mit dem Schlitten 30 bewegt wird, welcher mit einer Detektionseinrichtung 13 zusammenwirkt.

Die Detektionseinrichtung 13 ist ein Laserscanner, der einen Laserstrahl 14 erzeugt. Der Laserstrahl 14 wird mittels eines Spiegels 36 auf den Bügel 32 gelenkt, der mit dem Schlitten 30 verbunden ist. Hierdurch kann der Abstand des Bügels 32 sehr präzise von der Detektionseinrichtung 13 und damit die Position des Schlittens 30 gemessen werden. Da der Schlitten 30 fest mit der Verschiebestange 6 verbunden ist, ist hierdurch auch die Position der Verschiebestange 6 in der Zentrifuge eindeutig bestimmt.

Die Gewindestange 9 steht ein kleines Stück nach hinten am Halteelement 29 vor. Hier ist ein Antriebsritzel 33 an der Gewindestange 9 befestigt. Die Antriebseinheit 3 weist einen Motor 34, vorzugsweise einen Schrittmotor, auf, mit welchem das Antriebsritzel 33 der Gewindestange 9 über einen Riemen 35 angetrieben wird.

Da der Schlitten 30 und damit die Verschiebestange 6 an der Führungsschiene 28 drehfest geführt werden, wird durch eine Drehung der Gewindestange 9, die mit der Gewindestange 9 eingreifende Mutter 31 in axialer Richtung der Gewindestange 9 bzw. der Verschiebestange 6 bewegt, wodurch der Schlitten 30 und die Verschiebestange 6 entsprechend in Axialrichtung bewegt werden. Diese Einheit aus Basisgestell 15, Gewindestange 9, Schlitten 30 und Verschiebestange 6 stellt somit den Linearantrieb 11 dar, mit welchem eine Drehbewegung in eine Linearbewegung umgesetzt wird. Im Rahmen der Erfindung sind auch andere Linearantriebe möglich, die bspw. aus einer Zahnstange und einem Zahnrad besteht, das in die Zahnstange eingreift und somit eine Drehbewegung des Zahnrades in eine Linearbewegung umsetzt. Linearantriebe sind deshalb vorzugsweise Vorrichtungen, welche mittels eines Formschlusses (Mutter - Gewindestange bzw. Zahnrad - Zahnstange) bzw. eines kämmenden in Eingriffes eine Drehbewegung in eine Linearbewegung umsetzen. Im Gegensatz zu einem Reibschluss ist die Gefahr, dass sich die miteinander agierenden Komponenten zueinander verschieben, wesentlich geringer.

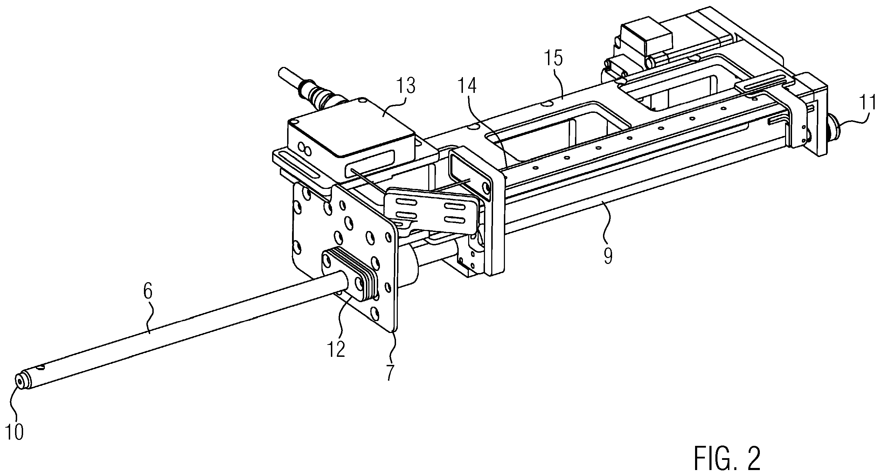

So kann die Verschiebestange 6 aus der Antriebseinheit 3 hinaus durch die Trennwand 7 in den Rotorraum 2 bewegt werden (Figur 2). Die Verschiebestange 6 kann sich auch durch den vollständigen Rotorraum 2 hindurch erstrecken, um so diesen an der gegenüberliegenden Seite der Trennwand 7 mit einem Ende durch eine Öffnung in einer Gehäusewand 16 wieder zu verlassen. Die Verschiebestange 6 erstreckt sich dann ausgehend von der Antriebseinheit 3 durch die Trennwand 7 hindurch, durch den Rotorraum 2, bis zu dem außerhalb des Zentrifugengehäuses angrenzenden Balkon 8.

Durch Änderung der Antriebsrichtung kann die Verschiebestange 6 auf selbigem Weg wieder zurück bewegt werden. Hierbei bewegt sie sich von außerhalb des Zentrifugengehäuses zurück durch den Rotorraum 2 durch die Öffnung in der Gehäusewand 16 bis hin zu einer Öffnung in der Trennwand 7 bewegt. Basierend darauf können die Bewegungsrichtungen der Verschiebestange 6 als aus der Zentrifuge 1 hinaus und als in die Zentrifuge 1 hinein bezeichnet werden. Die Bewegung findet entlang einer horizontalen Achse statt.

Die Öffnung in der Gehäusewand 16 kann durch eine Klappe oder eine Türe verschlossen werden. Die Öffnung ist so groß, dass eine Reaktionsgefäßeinheit und/oder eine Trägereinheit 5 für eine Reaktionsgefäßeinheit hindurchbewegt werden kann.

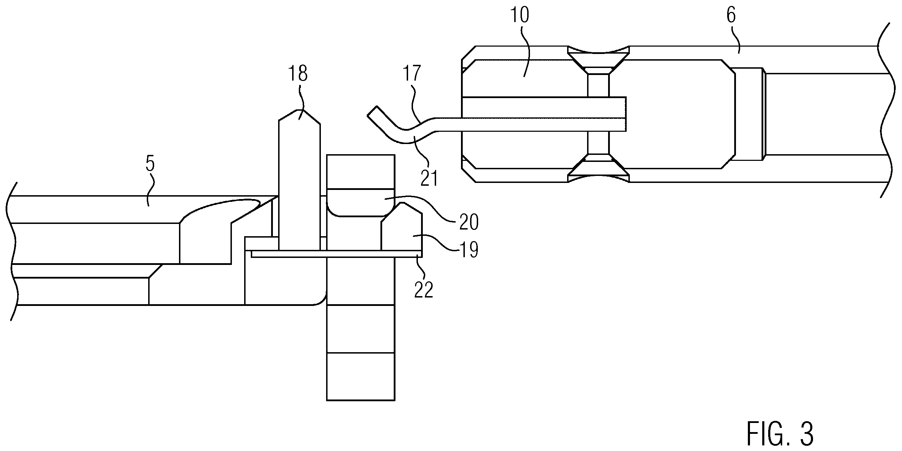

Die Verschiebestange 6 weist an ihrem freien Ende, welche sich durch den Rotorraum 2 bewegen kann, ein Kopplungselement 10 auf (Figur 3). Das Kopplungselement 10 dient dazu, ein wiederverbindbares Verbinden der Verschiebestange 6 mit einer Reaktionsgefäßeinheit oder einer Trägereinheit 5 für eine Reaktionsgefäßeinheit zu ermöglichen. Das Kopplungselement 10 umfasst ein Rastelement 17, welches entweder starr oder elastisch gelagert ist. Auch kann das Rastelement 17 starr gelagert sein und selbst eine elastische Beschaffenheit aufweisen.

Bevorzugt ist das Rastelement 17 ein Federblech, welches im Inneren der hohlen Verschiebestange 6 fixiert ist und an dem aus der Verschiebestange herausschauenden Ende eine nach unten vorstehende Rastnase 21 aufweist, welche durch Verformung des Federbleches hergestellt werden kann (Figur 3).

Die Trägereinheit 5 für eine Reaktionsgefäßeinheit dient dazu, eine Reaktionsgefäßeinheit aufzunehmen, welche dann durch Bewegen der Trägereinheit 5 an eine vordefinierte Position bewegt werden kann.

Reaktionsgefäßeinheiten können einzelne Röhrchen sowie auch mehrere Reaktionsgefäße sein, welche sich in einer festen Anordnung befinden. Bevorzugt handelt es sich bei der Reaktionsgefäßeinheit um eine Mikrotiterplatte. Die Mikrotiterplatte kann eine 96 Well, 384 Well oder 1536 Well Mikrotiterplatte sein. Die Mikrotiterplatte entspricht vorzugsweise dem SBS-Format. Sie kann jedoch auch in einem Spezialformat ausgebildet sein.

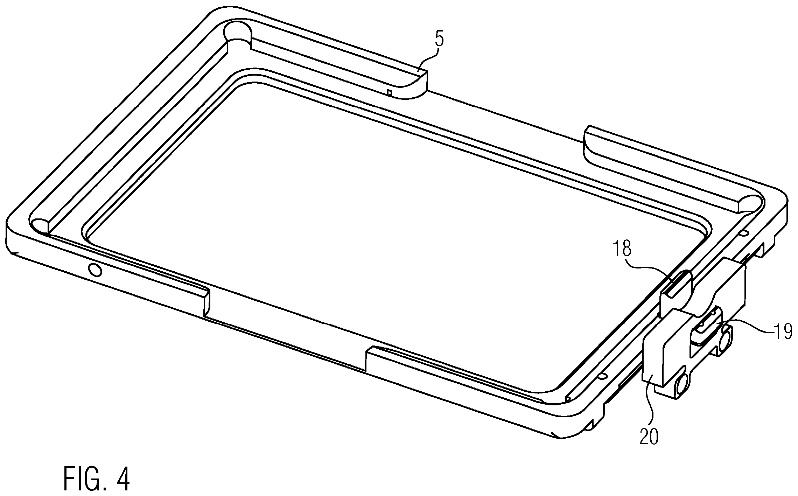

Die Trägereinheit 5 kann in Form eines Rahmens oder Gestells ausgebildet sein, welcher die entsprechende Reaktionsgefäßeinheit aufnehmen kann (Figur 4). Mittels der Trägereinheit 5 kann die Reaktionsgefäßeinheit in den Rotorraum 2 zum Beladen der Zentrifuge oder aus der Zentrifuge hinaus auf den Balkon 8 bewegt werden, um die Zentrifuge 1 zu entladen.

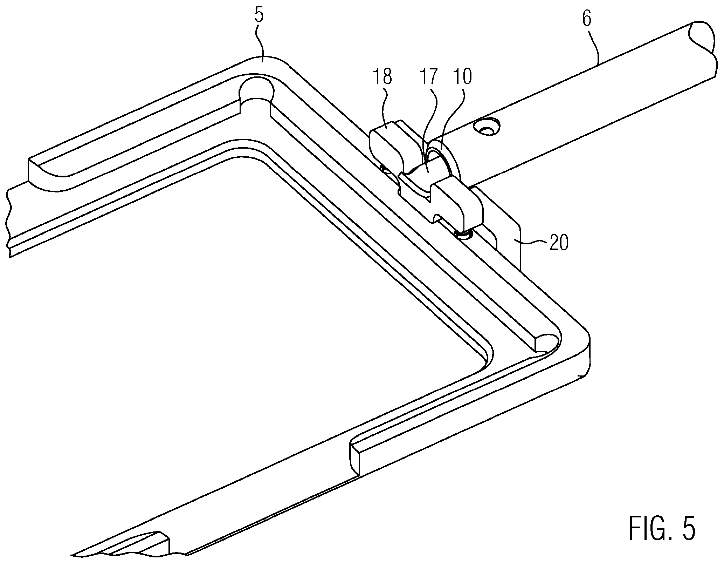

Zur Bewegung der Trägereinheit 5 wird diese an die Verschiebestange 6 über ein Kopplungselement 10 gekoppelt (Figur 5).

Um die Verschiebestange 6 mit der Trägereinheit 5 zu koppeln, greift das Rastelement 17 mit der Rastnase 21 mit einem Gegenrastelement 18 an der Trägereinheit 5 ein. Bevorzugt ist entweder das Rastelement 17 oder das Gegenrastelement 18 elastisch gelagert.

Auch können sind beide elastisch gelagert sein. Hierdurch werden die Kräfte beim Aufeinandertreffen des Rastelements 17 mit dem Gegenrastelement 18 durch die Elastizität beider Teile gering gehalten und der Prozess des Eingreifens erleichtert.

Das Gegenrastelement 18 kann auf verschiedene Arten elastisch gelagert sein. So kann es zum Beispiel durch Spiralfedern elastisch an der Trägereinheit 5 angeordnet sein. Auch eine elastische Anordnung mittels einer Blattfeder 22, welche sich entlang des unteren Randes der Trägereinheit 15 erstreckt, kann verwendet werden.

Das Gegenrastelement 18 kann mit einem Verriegelungsbügel 19 gekoppelt sein. Der Verriegelungsbügel 19 bewegt sich dann zusammen mit dem Gegenrastelement 18 in Vertikalrichtung, wenn dieses durch die auf das Gegenrastelement 18 treffende Verschiebestange 6 mit dem Rastelement 17 bewegt wird. Der Verriegelungsbügel 19 dient dazu, die Trägereinheit 5 bei der Positionierung im Rotorraum mit dem Rotor über ein Gegenverriegelungselement 20 zu verriegeln. Diese Verriegelung der Trägereinheit 5 über einen Verriegelungsbügel 19 mit einem Gegenverriegelungselement 20 findet dann statt, wenn die Trägereinheit 5 auf dem Rotor 4 im Rotorraum 2 positioniert wurde und sich die Rastnase 21 des Rastelements 17 von dem Gegenrastelement 18 gelöst hat.

Der Ablauf des Be- und Entladens der Zentrifuge 1 läuft wie folgt ab: Die Trägereinheit 5 befindet sich außerhalb der Zentrifuge 1 auf dem Balkon 8 vor einer Öffnung in der Gehäusewand 16. Die Verschiebestange 6 wird durch den Linearantrieb 11 in Richtung des Rotorraums ausgefahren bis sie sich durch diesen komplett erstreckt und auf der Gegenseite durch die Öffnung in der Gehäusewand 16 den Rotorraum 2 wieder verlässt. Die Verschiebestange 6 wird nun soweit ausgefahren bis das Rastelement 17 des Kopplungselements 10 der Verschiebestange 6 auf das Gegenrastelement 18 der Trägereinheit 5 trifft. Durch weiteres Ausfahren der Verschiebestange 6 hintergreift die Rastnase 21 des Rastelements 17 das Gegenrastelement 18. Ein Rahmen oder eine Kante des Balkons 8 kann hierbei als Anschlag für die Trägereinheit 5 wirken, um zu verhindern, dass die Verschiebestange 6 die Trägereinheit 5 lediglich vor sich herschiebt. Dadurch wird ein zuverlässiges Verrasten des Rastelements 17 mit dem Gegenrastelement 18 durchführbar. Während sich das Rastelement 17 über das Gegenrastelement 18 schiebt, bis es die endgültige Eingriffsposition erreicht hat, werden sowohl das Rastelement 17 als auch das Gegenrastelement 18, aufgrund ihrer elastischen Anordnungen, jeweils voneinander weggedrückt. Da wird durch das Übereinandergleiten erleichtert. Wenn sich das Rastelement 17 in vollständigem Eingriff mit dem Gegenrastelement 18 befindet, dann befindet sich das Gegenrastelement 18 mit dem daran gekoppelten Verriegelungsbügel 19 in einer leicht gesenkten Position. Diese gesenkte beziehungsweise nach unten in Richtung des Bodens der Trägereinheit 5 gerichteten Position wird durch die Kraft des Rastelements 17, welche auf das Gegenrastelement 18 ausgeübt wird, verursacht.

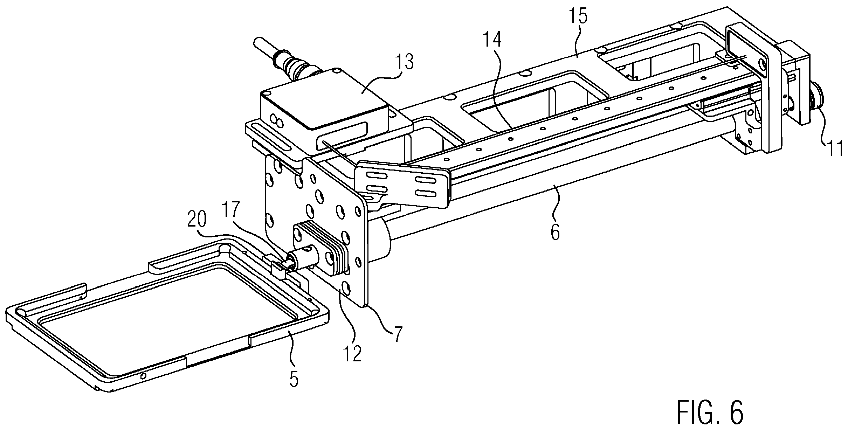

Der Ankopplungsprozess ist nun beendet und die Verschiebestange 6 kann wieder mittels des Linearantriebs 11 zurück in den Rotorraum 2 bewegt werden. Hierbei zieht sie die angekoppelte Trägereinheit 5 vom Balkon 8 durch die Öffnung in der Gehäusewand 16 in den Rotorraum 2 hinein bis zu einer endgültigen Position auf dem Rotor 4 (Figur 6). Die endgültige Position im Rotor 4 ist erreicht, wenn die Trägereinheit 5 auf ein Stoppelement bzw. Gegenverriegelungselement 20 trifft, welches einen Bestandteil des Rotors 4 darstellt.

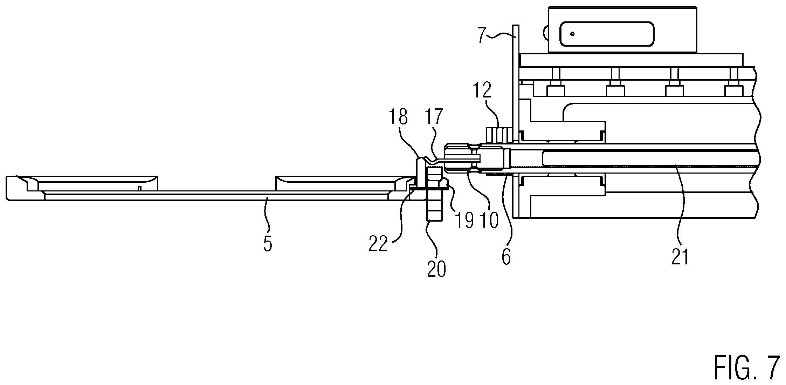

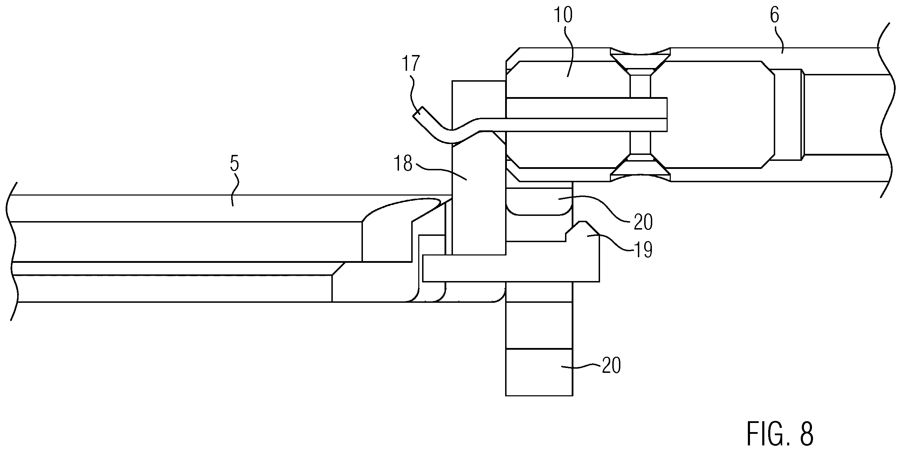

Durch die gesenkte Position des Gegenrastelements 18 und des Verriegelungsbügels 19 wird ermöglicht, dass der Verriegelungsbügel 19 unter einen Abschnitt des Stoppelements bzw. Gegenverriegelungselements 20 eintauchen kann. Wird die Verschiebestange 6 nun weiter eingezogen, d.h., durch die Trennwand 7, welche an die Antriebseinrichtung angrenzt, dann wird die Trägereinheit 5 durch das Stoppelement 20 an ihrer Position gehalten und das Rastelement 17 der Verschiebestange 6 wird zurück über das Gegenrastelement 18 gezogen bis es vollständig den Kontakt verliert (Figur 7). Nachdem die Verschiebestange 6 von der Trägereinheit 5 getrennt wurde, heben sich die elastisch gelagerten Bestandteile der Trägereinheit 5 (Gegenrastelement 18 und Verriegelungsbügel 19) zurück in ihre Ausgangsposition. Der Verriegelungsbügel 19, welcher unter das Gegenverriegelungselement 20 eingetaucht ist, greift nun mit dem Gegenverriegelungselement 20 ein. Dadurch wird sichergestellt, dass die Trägereinheit 5 mit dem Rotor 4 über das Gegenverriegelungselement 20 verbunden ist (Figur 8).

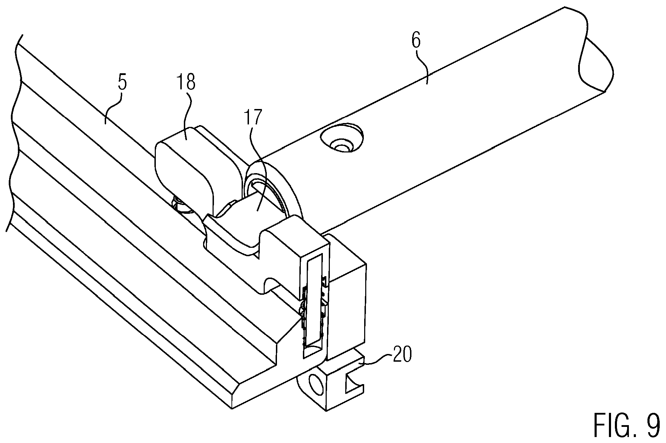

Nach Beendigung des Zentrifugationsvorgangs wird die Verschiebestange 6 aus ihrer eingefahrenen Position aus der Trennwand 7 wieder in Richtung des Rotorraumes ausgefahren bis sie über das Rastelement 17 wieder mit dem Gegenrastelement 18 an die Trägereinheit ankoppelt (Figur 9). Wie oben beschrieben befindet sich zu dem Zeitpunkt, wenn das Rastelement 17 mit dem Gegenrastelement 20 im Eingriff steht, der Verriegelungsbügel 19 in einer nach unten in Richtung des Bodens der Trägereinheit gerichteten Position, wodurch eine Entriegelung des Verriegelungsbügels 19 mit dem Gegenverriegelungselement 20 erfolgt. Somit ist es möglich, durch weiteres Bewegen der Verschiebestange 6 durch den Rotorraum 2 hindurch die Trägereinheit 5 stabil und präzise aus dem Rotorraum 2 hinaus auf den Balkon 8 zu bewegen. Hierfür wird die Öffnung in der Gehäusewand 16 geöffnet.

Befindet sich nun die Trägereinheit 5 auf dem Balkon 8, kann die darin befindliche Reaktionsgefäßeinheit entnommen und gegebenenfalls durch eine neue ersetzt werden. Ebenfalls denkbar ist das erneute Befüllen der Reaktionsgefäße gefolgt von einem weiteren Zentrifugationsschritt.

Bei Bedarf kann die Reaktionsgefäßeinheit entweder beim Prozess des Beladens der Zentrifuge aber auch bereits beim Entladen der Zentrifuge mittels einer Pipettiereinrichtung befüllt werden. Die Pipettiereinrichtung kann zum Beispiel an der Außenseite der Gehäusewand 16 der Zentrifuge 1 angebracht sein. Die Pipettiereinrichtung weist mehrere parallel nebeneinander in Reihe angeordnete Düsen auf, welche mit ihrer Düsenöffnung nach unten münden. Die Düsen sind jeweils kleine Röhrchen, welche gegenüber der Vertikalen geringfügig geneigt angeordnet sein können. Hierdurch wird ein Flüssigkeitsstrahl schräg gegenüber einer Vertikalen in die Reaktionsgefäße eingebracht. Benachbart zu den Düsen der Pipettiereinrichtung kann auch eine eingangs beschriebene optische Detektiereinrichtung zur zwei- oder dreidimensionalen Abtastung der Reaktionsgefäßeinheit vorgesehen sein.

Die Trägereinheit 5, welche die Reaktionsgefäßeinheit umfasst, wird unter der Pipettiereinrichtung hindurch bewegt, wobei die in der Reaktionsgefäßeinheit befindlichen Reaktionsgefäße mit einer Flüssigkeit befüllt werden können. Zum Pipettieren wird vorzugsweise die Bewegung der Trägereinheit 5 bzw. der Reaktionsgefäßeinheit angehalten. Eine Reaktionsgefäßeinheit wie z.B. eine Mikrotiterplatte, die in einem zweidimensionalen Raster Reaktionsgefäße aufweist, wird daher schrittweise und teilweise pipettiert.

Der Prozess des Be- und Entladens der Zentrifuge bzw. des Befüllens und Entleerens der Reaktionsgefäße kann vollautomatisch mehrmals wiederholt werden.

Die Verschiebestange 6 weist bevorzugt eine glatte Oberfläche auf.

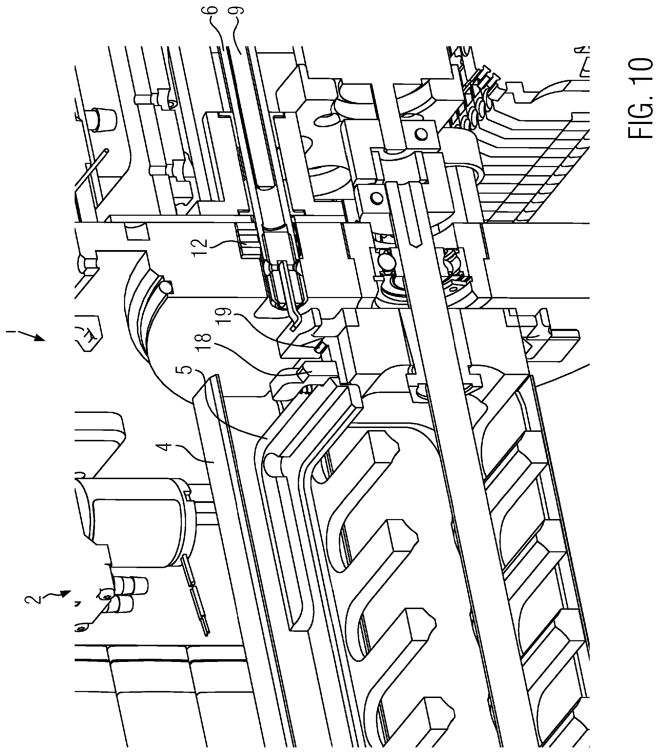

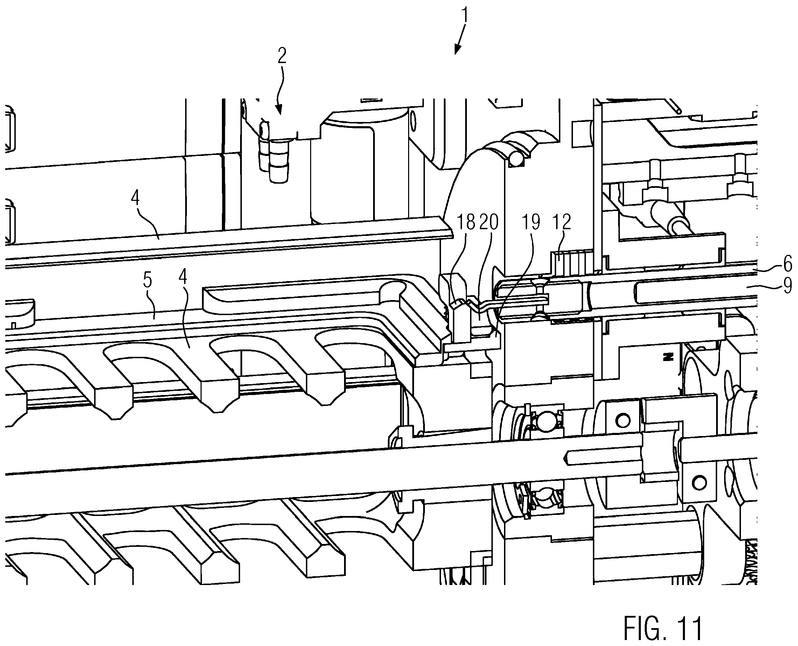

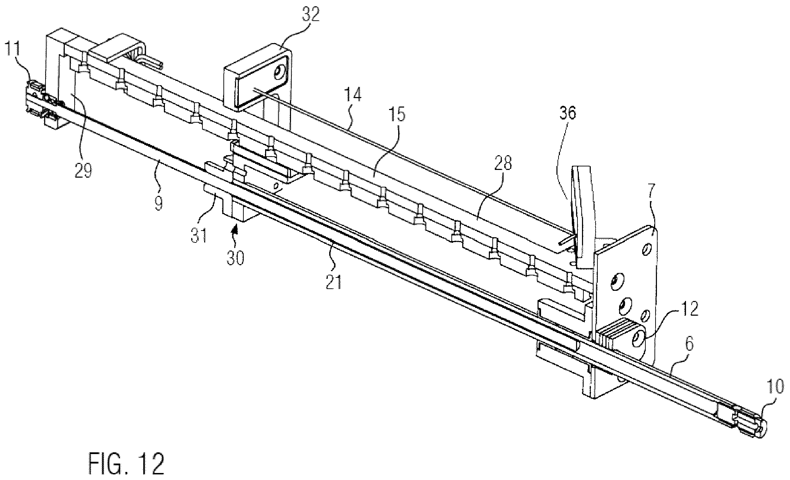

Bei einer Ausführungsform ist die Verschiebestange 6 hohl und an dem gegenüberliegenden Ende, an welchem sich das Kopplungselement befindet, d.h. an dem vom Rotorraum wegweisenden Ende offen. In dieser Öffnung kann sich eine Gewindestange 9 koaxial zur Verschiebestange 6 durch eine Drehbewegung der Gewindestange 21 in die Verschiebestange 6 eintauchen. Dies wird dadurch ermöglicht, dass die Gewindestange 9 sich mit einem mit der Verschiebestange 6 verbundenem Gewinde in Eingriff befindet, so dass durch eine Drehbewegung der Gewindestange 9 eine Translationsbewegung der Verschiebestange 6 ausgeführt wird (Figuren 10 bis 12).

Die Verschiebestange 6 erstreckt sich durch eine Öffnung in einer Trennwand 7 zwischen dem Antriebseinheit 3 in dem Rotorraum 2 (Figuren 10 bis 12). In dem Bereich der Öffnung der Trennwand 7 ist ein Dichtungselement 12 angeordnet, welches die Verschiebestange 6 gegenüber der Trennwand 7 abdichtet. Bei dem Dichtungselement 12 kann es sich um eine Packdichtung handeln. Bevorzugt liegt das Dichtungselement 12 sehr eng an der Verschiebestange 6 an, um so eine möglichst hohe Abdichtung zu erzielen. Die hohen Reibungskräfte, welche durch das enge Anliegen eines Dichtungselements 12 an der Verschiebestange 6 bei der Bewegung der Verschiebestange 6 entstehen, können durch den beschriebenen Linearantrieb mittels einer Gewindestange 9 überwunden werden.

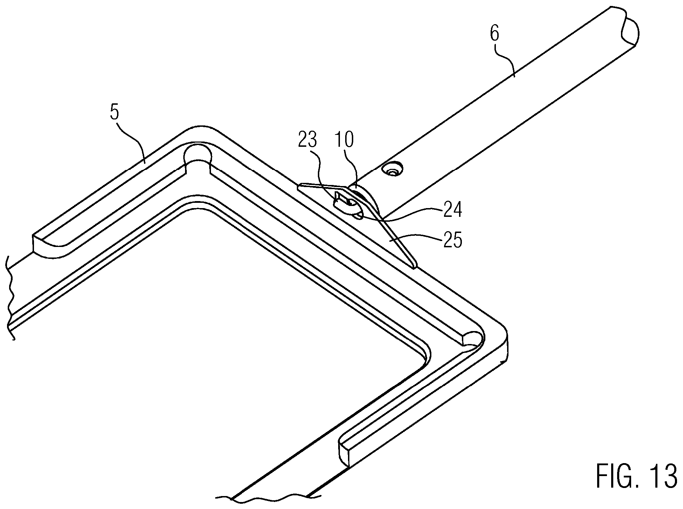

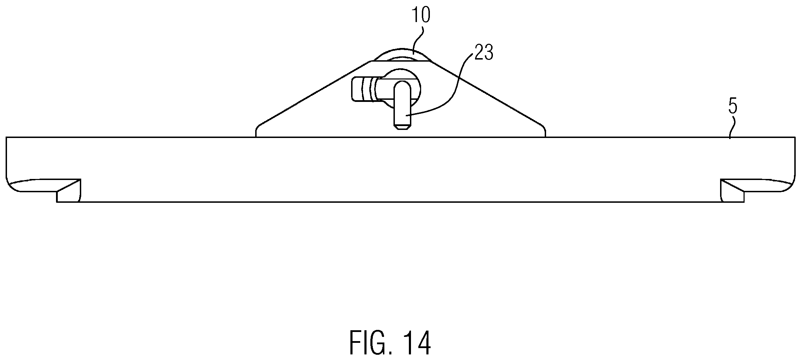

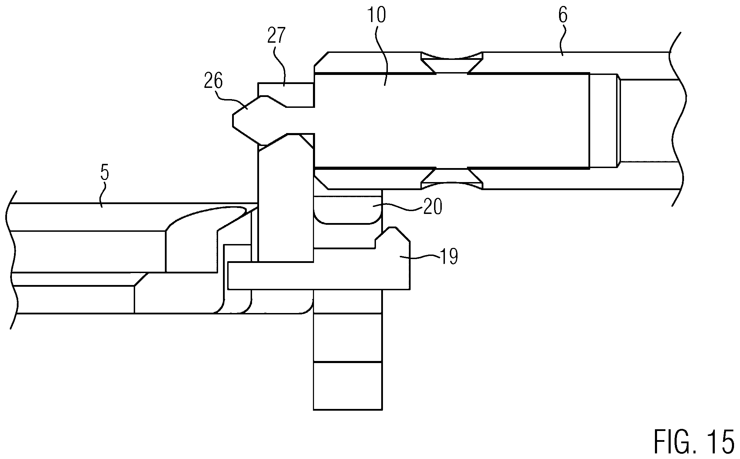

Alternativ kann das Kopplungselement 10 einen drehbaren Haken 23 oder einen Zapfen 26 (Figuren 13 bis 15) oder als weitere Alternative eine Magnetkopplung aufweisen.

Umfasst das Kopplungselement 10 einen drehbaren Haken 23, um eine Reaktionsgefäßeinheit oder eine Trägereinheit 5 für eine Reaktionseinheit anzukoppeln, so wird der Haken durch eine Hakenaufnahmeöffnung 24 geführt, welche sich in einem Hakenaufnahmeabschnitt 25 befindet. Der Hakenaufnahmeabschnitt 25 bildet einen Bestandteil der Reaktionsgefäßeinheit oder der Trägereinheit 5. Der Haken 23 befindet sich am vorderen Ende der Verschiebestange 6, weshalb der durch die oben beschriebene Verschiebebewegung der Verschiebestange 6 in linearer Richtung passgenau durch die dafür vorgesehene Hakenaufnahmeöffnung 24 geführt werden kann.

Die Hakenaufnahmeöffnung 24 ist derart gestaltet, dass bei einer Drehung des Hakens 23 dieser derart mit dem Hakenaufnahmeabschnitt 25 eingreift, dass eine Verkopplung der Verschiebestange mit der Reaktionsgefäßeinheit oder der Trägereinheit 5 stattfindet. Dies ermöglicht, alternativ zu dem oben beschriebenen Verfahren, die Reaktionsgefäßeinheit oder die Trägereinheit 5 mittels der Verschiebestange 6 präzise über die Kopplung mittels dem Haken 23 entlang der linearen Verschiebungsachse der Verschiebestange 6 zu positionieren.

Damit der Haken 23 hinter den Hakenaufnahmeabschnitt 25 eingreifen kann, muss der Haken 23 zunächst in die Hakenaufnahmeöffnung 24 eingeführt werden. Anschließend findet das Eingreifen durch eine Drehung des Hakens um circa 90 bis 270° statt, um so die Position des Hakens derart zu verändern, dass ein Herausziehen aus der Hakenaufnahmeöffnung 24 nicht mehr möglich ist.

Eine Entkopplung kann dadurch herbeigeführt werden, dass der Haken 23 in die ursprüngliche Position wie bei der Einführung des Hakens in die Hakenaufnahmeöffnung 24 zurückgedreht wird und somit ein Herausziehen aus der Hakenaufnahmeöffnung 24 möglich ist.

Eine weitere Ausführungsform kann ein Kopplungselement 10, welches einen Zapfen 26 aufweist, darstellen. Solch eine Ausführungsform ist ähnlich zu der oben beschriebenen Ausführungsform mit einem Rastelement 17 und Gegenrastelement 18. Der Unterschied besteht darin, dass anstelle des Rastelements 17 und dem Gegenrastelement 18 ein Zapfen 26 bzw. ein Zapfenaufnahmeelement 27 zur Kopplung der Verschiebestange 6 an die Trägereinheit 5 verwendet werden. Hierbei schiebt sich der Zapfen 26 in eine elastisch gelagerte Öffnung des Zapfenaufnahmeelements 27. Die Öffnung wird durch das Hineinführen des Zapfens 26 aufgrund ihrer Elastizität vergrößert bis der Zapfen komplett durch geschoben wurde und mit dem Zapfenaufnahmeelement in seiner Endposition in Eingriff steht. Während dieses Kopplungsprozesses findet auch der Verriegelungsvorgang wie oben beschrieben mit dem Verriegelungsbügel 19 und dem Gegenverriegelungselement 20 statt. Die Rotationsachse des Rotors 4 ist bevorzugt horizontal und somit parallel zu der horizontalen Bewegungsrichtung der Verschiebestange 6.

Der Gegenstand der vorliegenden Erfindung eignet sich zum Zentrifugieren von Reaktionsgefäßeinheiten und vor allem zum Zentrifugieren von Reaktionsgefäßeinheiten, bei welchen die Öffnungen der Reaktionsgefäße von der Rotationsachse weg orientiert sind. Dies bedeutet, dass mittels der hierin beschriebenen Zentrifuge insbesondere das Waschen bzw. Entleeren von Reaktionsgefäßen vorteilhaft durchgeführt werden kann. In Kombination mit dem automatisierten Befüllen mittels einer Pipettiereinrichtung lassen sich somit mit der vorliegenden Erfindung Versuchsschritte wiederholt voll automatisiert nacheinander durchführen, welche das Befüllen und Entleeren von Reaktionsgefäßen beinhalten. Durch die präzise Positionierung der Reaktionsgefäßeinheiten bzw. der Trägereinheit für eine Reaktionsgefäßeinheit wird eine exakte Befüllung der einzelnen Reaktionsgefäße ermöglicht und durch das Zentrifugieren, wobei die Öffnungen der Reaktionsgefäße von der Rotationsachse wegorientiert sind, findet ein kontaktfreies gründliches Entleeren der Reaktionsgefäße statt. Insgesamt kann somit der Prozess des Befüllens sowie des Entleerens einer Reaktionsgefäßeinheit präziser und voll automatisch durchgeführt werden. Insbesondere bei Reaktionsgefäßeinheiten wie Mikrotiterplatten, die bis zu 1536 einzelne Reaktionsgefäße aufweisen, ist der Gegenstand der hierin beschriebenen Erfindung äußerst vorteilhaft.

Insbesondere eignet sich die vorliegende Erfindung für eine Integration in einen voll automatisierten Versuchsablauf.

Die hierin beschriebene Zentrifuge eignet sich auch für Experimente, bei denen magnetische Beads bzw. Kügelchen verwendet werden, die im Laufe des Experiments gewaschen werden müssen. Es ist bekannt, dass die magnetischen Kügelchen gegebenenfalls manuell mittels einem Magneten in dem Reaktionsgefäß gehalten werden können, während das Reaktionsgefäß zum Beispiel ausgeschüttelt wird, um die Waschlösung zu entfernen. Mittels der hierin beschriebenen Zentrifuge kann solch ein Waschschritt vollautomatisch durchgeführt werden. Durch Ansetzen magnetischer Wechselwirkungen während des Zentrifugationsschrittes kann verhindert werden, dass die magnetischen Kügelchen das Reaktionsgefäß verlassen. Sind bei der Zentrifugation die Öffnungen der Reaktionsgefäße von der Rotationsachse weg orientiert, wird ermöglicht, dass in dem Reaktionsgefäß enthaltene Flüssigkeit entfernt wird und gleichzeitig die magnetischen Kügelchen in dem Reaktionsgefäß bleiben. Somit wird ein kontaktfreies und gründliches Waschen ermöglicht ohne dass ein Verlust der magnetischen Kügelchen befürchtet werden muss.

Der Rotorraum der Zentrifuge ist von einem Gehäuse (nicht dargestellt) umgeben. Das Gehäuse kann mit einer Sprüheinrichtung versehen sein, mit welcher ein Dekontaminationsmittel in den Rotorraum einsprühbar ist. Die Sprüheinrichtung weist eine oder mehrere Sprühdüsen auf, die vorzugsweise das Dekontaminationsmittel in feinen Tröpfchen im Rotorraum verteilen. Ein solches Dekontaminationsmittel kann eine Lauge, ein starkes Oxidationsmittel oder ein Mittel auf Alkoholbasis sein. Durch das Vorsehen einer solchen Sprüheinrichtung kann der Rotorraum zu einem jedem beliebigen Zeitpunkt dekontaminiert bzw. sterilisiert werden. Der Rotor wird beim Einsprühen des Dekontaminationsmittels vorzugsweise nur langsam gedreht, damit sich das Dekontaminationsmittel gleichmäßig im Rotorraum verteilt. Das Rotorgehäuse ist beispielsweise aus zwei Halbschalen ausgebildet. Die Sprühdüsen sind dann vorzugsweise an der Nahtstelle zwischen den beiden Halbschalen angeordnet.

Das Rotorgehäuse kann mit einem Fenster ausgebildet sein, so dass es möglich ist, von außen in den Rotorraum zu blicken. Hierdurch kann beispielsweise eine Schaumbildung oder es können andere Effekte im Rotorraum erkannt werden. Dies ist vor allem zweckmäßig, wenn neue Verfahren in der Zentrifuge getestet werden.

Die Zentrifuge weist vorzugsweise eine Steuereinrichtung auf, welche den Linearantrieb zum Verschieben der Verschiebestange ansteuert. In dieser Steuereinrichtung liegt vorzugsweise ein Steuersignal vor, das die Position der Verschiebestange und damit auch die Position einer an die Verschiebestange gekoppelten Reaktionsgefäßeinheit beschreibt. Dieses Positionssignal weist vorzugsweise eine Genauigkeit von zumindest 0,2 mm und insbesondere von zumindest 0,1 mm auf. Die Positionierung der Verschiebestange ist an sich beliebig oft mit der gewünschten Genauigkeit wiederholbar, wobei beliebig oft zumindest 1000 Bewegungen der Verschiebestange und vorzugsweise zumindest 10 000 Bewegungen der Verschiebestange bedeuten.

Durch die Verwendung eines Linearantriebs, der die Verschiebestange exakt positionieren kann, ist es nicht notwendig, im Bereich des Rotorraums oder im Bereich des Balkons entsprechende Sensoren vorzusehen, mit welchen der Ort der Reaktionsgefäßeinheit, einer Trägereinheit für die Reaktionsgefäßeinheit oder der Verschiebestange detektiert wird. Entsprechende Sensoren können entfallen. Hierdurch gestaltet sich der Aufbau der Zentrifuge in dem Abschnitt, in dem eine Reaktionsgefäßeinheit bewegt wird, sehr einfach. Daher ist eine solche Zentrifuge auch einfach an weitere Laborgeräte koppelbar, welche die Zentrifuge abgeben oder aufnehmen, wie z. B. ein Roboterarm.

**Bezugszeichenliste:**

| | | | |
|---|---|---|---|
| 1 | Zentrifuge | | |
| 2 | Rotorraum | 18 | Gegenrastelement |
| 3 | Antriebseinheit | 19 | Verriegelungsbügel |
| 4 | Rotor | 20 | Gegenverriegelungselement / Stoppelement |
| 5 | Trägereinheit | | |
| 6 | Verschiebestange | 21 | Rastnase |
| 7 | Trennwand | 22 | Blattfeder |
| 8 | Balkon | 23 | Haken |
| 9 | Gewindestange | 24 | Haken Aufnahmeöffnung |
| 10 | Kopplungselement | 25 | Haken-Aufnahmeabschnitt |
| 11 | Linearantrieb | 26 | Zapfen |
| 12 | Dichtungselement | 27 | Zapfen-Aufnahmeelement |
| 13 | Detektionseinrichtung | 28 | Führungsschiene |
| 14 | Laserstrahl | 29 | Halteelement |
| 15 | Basisgestell | 30 | Schlitten |
| 16 | Gehäusewand | 31 | Mutter |
| 17 | Rastelement | 32 | Bügel |
| | | 33 | Antriebsritzel |
| | | 34 | Motor |
| | | 35 | Riemen |
| | | 36 | Spiegel |

## Patentansprüche

1. Zentrifuge (1) mit einem Rotor (4) und einem Rotorraum (2), in welchem der Rotor (4) angeordnet und um eine Rotationsachse drehbar gelagert ist, wobei der Rotor (4) einen Aufnahmebereich zum Aufnehmen einer Reaktionsgefäßeinheit mit Reaktionsgefäßen aufweist und derart ausgebildet ist, dass die Reaktionsgefäßeinheit zum Entleeren der Reaktionsgefäße mit ihren Öffnungen von der Rotationsachse weg orientiert aufgenommen werden kann, **dadurch gekennzeichnet,**
**dass** die Zentrifuge (1) mit einer Beladungs- und Entladungseinrichtung versehen ist, welche umfasst
eine starre Verschiebestange (6) zum Positionieren einer Reaktionsgefäßeinheit im oder zum Entfernen einer Reaktionsgefäßeinheit vom Rotor (4), wobei die Verschiebestange (6) derart horizontal verschieblich angeordnet ist, dass sie zwischen einer Entladestellung, bei der sie sich im Rotorraum (2) durch den Rotor (4) hindurch erstreckt, und einer Beladestellung, bei der sie zumindest aus dem Bereich des Rotorraums (2) herausgezogen ist, der vom Rotor (4) bei einer Umdrehung beansprucht wird, bewegbar ist,
einen Linearantrieb (11) zum Bewegen der Verschiebestange (6) zwischen der Entladestellung und der Beladestellung und wobei die Zentrifuge eine Detektionseinrichtung (13) zur Bestimmung der Position der Verschiebestange (6) in Bewegungsrichtung sowie eine Pipettiereinheit mit mehreren Pipettierdüsen aufweist, so dass eine Reaktionsgefäßeinheit unter der Pipettiereinheit angeordnet werden kann, um ein Reaktionsgefäß zu befüllen.

2. Zentrifuge (1) nach Anspruch 1,
**dadurch gekennzeichnet,**
**dass** an einem freien in den Rotorraum (2) befindlichen Ende der Verschiebestange (6) ein Kopplungselement (10) angeordnet ist, wobei das Kopplungselement (10) zum wiederverbindbaren Verbinden der Verschiebestange (6) mit einer Reaktionsgefäßeinheit oder einer Trägereinheit (5) für eine Reaktionsgefäßeinheit ausgebildet ist.

3. Zentrifuge (1) nach Anspruch 2,
**dadurch gekennzeichnet,**
**dass** das Kopplungselement (10) ein Rastelement (17) aufweist, welches mit einem an der Reaktionsgefäßeinheit oder an der Trägereinheit (5) vorgesehenen Gegenrastelement (18) eingreifen kann, wobei zumindest das Rastelement (17) oder das Gegenrastelement (18) elastisch gelagert ist.

4. Zentrifuge (1) nach Anspruch 3,
**dadurch gekennzeichnet,**
**dass** das Gegenrastelement (18) der Reaktionsgefäßeinheit oder der Trägereinheit (5) elastisch gelagert ist und mit einem Verriegelungsbügel (19) gekoppelt ist, so dass der Verriegelungsbügel (19) zwischen zwei Stellungen schwenkbar ist, wobei eine Entriegelungsstellung eingenommen wird, wenn das Rastelement (17) und das Gegenrastelement (18) miteinander verrastet sind, und eine Verriegelungseinstellung eingenommen wird, wenn das Rastelement (17) und das Gegenrastelement (18) voneinander getrennt sind, wobei der Verriegelungsbügel (19) ein Verriegelungselement aufweist, das in einer Verriegelungsstellung mit einem korrespondierenden Gegenverriegelungselement (20) eingreifen kann.

5. Zentrifuge (1) nach einem der Ansprüche 2 bis 4,
**dadurch gekennzeichnet,**
**dass** die Verschiebestange (6) eine glatte Oberfläche besitzt.

6. Zentrifuge (1) nach einem der Ansprüche 1 bis 5,
**dadurch gekennzeichnet,**
**dass** die Verschiebestange (6) hohl ist und an dem vom Rotorraum (2) weg weisenden hinteren Ende offen ausgebildet ist und eine Gewindestange (9) koaxial zur Verschiebestange (6) vorgesehen ist, und die Gewindestange (9) mit einem mit der Verschiebestange (6) verbundenen Gewinde sich in kämmenden in-Eingriff befindet, so dass durch eine Drehbewegung der Gewindestange (9) eine Translationsbewegung der Verschiebestange (6) ausgeführt wird, wobei die Gewindestange (9) am hinteren Ende in die Verschiebestange (6) eintauchen kann.

7. Zentrifuge (1) nach einem der Ansprüche 1 bis 6,
**dadurch gekennzeichnet,**
**dass** der Rotorraum (2) von einem Gehäuse umschlossen ist und die Verschiebestange (6) durch eine Öffnung in einer Gehäusewand (16) geführt ist, wobei im Bereich der Öffnung ein Dichtungselement (12) vorgesehen ist, das die Verschiebestange (6) gegenüber der Gehäusewandung abdichtet.

8. Zentrifuge (1) nach einem der Ansprüche 1 bis 7,
**dadurch gekennzeichnet,**
**dass** die Zentrifuge (1) mit einer horizontalen Rotationsachse ausgebildet ist, um welche der Rotor im Betrieb der Zentrifuge rotiert.

9. Zentrifuge (1) nach einem der Ansprüche 1 bis 8,
**gekennzeichnet durch**
eine optische Detektionseinheit, wobei die optische Detektionseinheit vorzugsweise derart ausgebildet und angeordnet ist, dass sie benachbart zum Rotorraum (2) im Bewegungsbereich der Reaktionsgefäßeinheit diese abtasten kann.

10. Zentrifuge (1) nach Anspruch 9,
**dadurch gekennzeichnet,**
**dass** die Detektionseinheit eine Zeilenkamera umfasst, um Reaktionsgefäßeinheit zeilenförmig abzutasten, wobei eine Abtastzeile etwa senkrecht zur Bewegungsrichtung der Reaktionsgefäßeinheit ausgerichtet ist.

11. Zentrifuge (1) nach Anspruch 9 oder 10,
**dadurch gekennzeichnet,**
**dass** die Detektionseinheit eine Farbkamera aufweist, um eine Reaktionsgefäßeinheit spektral abzutasten.

12. Zentrifuge (1) nach einem der Ansprüche 9 bis 11,
**dadurch gekennzeichnet,**
**dass** die optische Detektionseinheit zur 3D-Abtastung einer Reaktionsgefäßeinheit ausgebildet ist.

13. Zentrifuge (1) nach einem der Ansprüche 9 bis 12,
**dadurch gekennzeichnet,**
**dass** die Zentrifuge (1) eine Auswerteeinrichtung aufweist, mit welcher die mit der optischen Detektionseinrichtung erhaltenen Signale automatisch nach folgenden Parametern ausgewertet werden:
- Farbe des Inhalts zumindest eines Reaktionsgefäßes der Reaktionsgefäßeinheit,
- Füllstand zumindest eines Reaktionsgefäßes der Reaktionsgefäßeinheit,
- Position der Reaktionsgefäßeinheit,
- Typ der Reaktionsgefäßeinheit.

14. Zentrifuge (1) nach einem der Ansprüche 1 bis 13,
**dadurch gekennzeichnet,**
**dass** der Linearantrieb (11) eine drehende Bewegung in eine Linearbewegung durch einen formschlüssigen bzw. kämmenden in-Eingriff umsetzt.

15. Zentrifuge (1) nach einem der Ansprüche 1 bis 14,
**dadurch gekennzeichnet,**
**dass** die Zentrifuge (1) ein Gehäuse aufweist, das den Rotorraum (2) umschließt, wobei am Gehäuse eine Sprüheinrichtung zum Einsprühen von einer Dekontaminationslösung in den Innenraum vorgesehen ist.

16. Zentrifuge (1) nach einem der Ansprüche 1 bis 15,
**dadurch gekennzeichnet,**
**dass** die Zentrifuge (1) ein Gehäuse aufweist, das den Rotorraum (2) umschließt, wobei das Gehäuse mit einem Fenster versehen ist.

17. Zentrifuge (1) nach einem der Ansprüche 1 bis 16,
**dadurch gekennzeichnet,**
**dass** die Zentrifuge (1) eine Steuereinrichtung aufweist, welche den Linearantrieb (11) ansteuert, wobei in der Steuereinrichtung ein Steuersignal vorliegt, das die Position der Verschiebestange (6) beschreibt, und die Steuereinrichtung eine Schnittstelle aufweist, über welche die Position der Verschiebestange (6) an ein weiteres Gerät, wie z. B. ein Roboter, oder an eine weitere Komponente der Zentrifuge (1), wie z. B. eine Pipettiereinheit, übermittelbar ist, so dass das weitere Gerät bzw. die weitere Komponente die Position der Verschiebestange (6) und damit die Position eine Reaktionsgefäßeinheit erhalten kann.

18. Zentrifuge (1) nach Anspruch 17,
**dadurch gekennzeichnet,**
**dass** das Steuersignal die Position der Verschiebestange (6) mit einer Genauigkeit von zumindest 0,2 mm und vorzugsweise von zumindest 0,1 mm beschreibt.

## Claims

1. A centrifuge (1) comprising a rotor (4) and a rotor compartment (2) in which the rotor (4) is arranged and rotatably supported about an axis of rotation, wherein the rotor (4) comprises a receiving area for receiving a reaction vessel unit comprising reaction vessels and is designed such that the reaction vessel unit can be received with its openings oriented away from the axis of rotation for emptying the reaction vessels,
**characterized in that**
the centrifuge (1) is provided with a loading and unloading device, which comprises
a rigid slide bar (6) for positioning a reaction vessel unit in the rotor (4) or for removing a reaction vessel unit from the rotor (4), wherein the slide bar (6) is arranged to be horizontally movable such that it can be moved between an unloading position in which it extends in the rotor compartment (2) through the rotor (4), and a loading position in which it is pulled out at least from that area of the rotor compartment (2) which is occupied by the rotor (4) during a revolution,
a linear drive (11) for moving the slide bar (6) between the unloading position and the loading position, and wherein the centrifuge comprises a detection device (13) for determining the position of the slide bar (6) in the direction of movement as well as a pipetting unit having a plurality of pipetting nozzles, so that a reaction vessel unit can be arranged underneath the pipetting unit in order to fill a reaction vessel.

2. The centrifuge (1) according to claim 1,
**characterized in that**
a coupling element (2) is arranged at a free end of the slide bar (6) located in the rotor compartment (10), wherein the coupling element (10) is formed for connecting the slide bar (6) to a reaction vessel unit or to a support unit (5) for a reaction vessel unit in a reconnectable manner.

3. The centrifuge (1) according to claim 2,
**characterized in that**
the coupling element (10) comprises a latching element (17) which can engage in a counter latching element (18) provided on the reaction vessel unit or on the support unit (5), wherein at least the latching element (17) or the counter latching element (18) is elastically supported.

4. The centrifuge (1) according to claim 3,
**characterized in that**
the counter latching element (18) of the reaction vessel unit or of the support unit (5) is elastically supported and coupled with a locking bracket (19), so that the locking bracket (19) is pivotable between two positions, wherein an unlocking position is adopted if the latching element (17) and the counter latching element (18) are latched with each other, and a locking position is adopted if the latching element (17) and the counter latching element (18) are separated from each other, wherein the locking bracket (19) comprises a locking element which is able to engage in a corresponding counter locking element (20) in a locking position.

5. The centrifuge (1) according to any of claims 2 to 4,
**characterized in that**
the slide bar (6) has a smooth surface.

6. The centrifuge (1) according to any of claims 1 to 5,
**characterized in that**
the slide bar (6) is hollow and formed so as to be open at the rear end facing away from the rotor compartment (2), and a threaded rod (9) is provided so as to be coaxial with the slide bar (6), and the threaded rod (9) is in meshing engagement with a thread connected to the slide bar (6) so that a translatory movement of the slide bar (6) is performed by a rotary movement of the threaded rod (9), wherein the threaded rod (9) can slide into the slide bar (6) at the rear end.

7. The centrifuge (1) according to any of claims 1 to 6,
**characterized in that**
the rotor compartment (2) is enclosed by a housing and the slide bar (6) is guided through an opening in a housing wall (16), wherein a sealing element (12), which seals the slide bar (6) with respect to the housing wall, is provided in the area of the opening.

8. The centrifuge (1) according to any of claims 1 to 7,
**characterized in that**
the centrifuge (1) is formed with a horizontal axis of rotation around which the rotor rotates in operation of the centrifuge.

9. The centrifuge (1) according to any of claims 1 to 8,
**characterized by**
an optical detection unit, wherein the optical detection unit is preferably designed and arranged such that it is able to scan the reaction vessel unit adjacent to the rotor compartment (2) in the movement range thereof.

10. The centrifuge (1) according to claim 9,
**characterized in that**
the detection unit comprises a line scan camera for scanning the reaction vessel unit line by line, wherein a scan line is oriented so as to be approximately perpendicular to the direction of movement of the reaction vessel unit.

11. The centrifuge (1) according to claim 9 or 10,
**characterized in that**
the detection unit comprises a color camera for spectrally scanning a reaction vessel unit.

12. The centrifuge (1) according to any of claims 9 to 11,
**characterized in that**
the optical detection unit is designed for making a 3D scan of a reaction vessel unit.

13. The centrifuge (1) according to any of claims 9 to 12,
**characterized in that**
the centrifuge (1) comprises an evaluation device by means of which signals obtained with the optical detection device are automatically evaluated according to the following parameters:
- color of the content of at least one reaction vessel of the reaction vessel unit,
- filling level of at least one reaction vessel of the reaction vessel unit,
- position of the reaction vessel unit,
- type of the reaction vessel unit.

14. The centrifuge (1) according to any of claims 1 to 13,
**characterized in that**
the linear drive (11) converts a rotational movement into a linear movement by an interlocking or meshing engagement.

15. The centrifuge (1) according to any of claims 1 to 14,
**characterized in that**
the centrifuge (1) comprises a housing which encloses the rotor compartment (2), wherein a spraying device for spraying a decontamination solution into the interior is provided on the housing.

16. The centrifuge (1) according to any of claims 1 to 15,
**characterized in that**
the centrifuge (1) comprises a housing which encloses the rotor compartment (2), wherein the housing is provided with a window.

17. The centrifuge (1) according to any of claims 1 to 16,
**characterized in that**
the centrifuge (1) comprises a control device which controls the linear drive (11), wherein a control signal describing the position of the slide bar (6) is present in the control device, and the control device comprises an interface via which the position of the slide bar (6) can be transmitted to a further apparatus, such as a robot, or to a further component of the centrifuge (1), such as a pipetting unit, so that the further apparatus or the further component can obtain the position of the slide bar (6) and thus the position of a reaction vessel unit.

18. The centrifuge (1) according to claim 17,
**characterized in that**
the control signal describes the position of the slide bar (6) with a precision of at least 0.2 mm and preferably of at least 0.1 mm.

## Revendications

1. Centrifugeuse (1) comprenant un rotor (4) et un compartiment de rotor (2) dans lequel le rotor (4) est disposé et logé de manière rotative autour d'un axe de rotation, sachant que le rotor (4) présente une zone de réception destinée à recevoir une unité de récipients de réaction comprenant des récipients de réaction et étant conçu de telle sorte que l' unité de récipients de réaction puisse être reçu de manière à ce que ses ouvertures soient orientées de manière à être détournées de l' axe de rotation pour la vidange des récipients de réaction,
**caractérisée en ce que**
la centrifugeuse (1) est pourvue d'un dispositif de chargement et de déchargement, lequel comprend
une barre de translation (6) rigide destinée à positionner une unité de récipients de réaction dans le rotor (4) ou pour l'enlèvement d'une unité de récipients de réaction depuis le rotor (4), sachant que la barre de translation (6) est disposée de manière horizontalement translatable de telle manière qu'elle soit mobile entre une position de déchargement dans laquelle elle s'étend dans le compartiment de rotor (2) à travers le rotor (4) et une position de chargement dans laquelle elle est au moins en partie retirée de laquelle zone du compartiment de rotor (2) qui est sollicitée par le rotor (4) lors d'une révolution,
un entraînement linéaire (11) destiné à mouvoir la barre de translation (6) entre la position de déchargement et la position de chargement et sachant que la centrifugeuse présente un dispositif de détection (13) destiné à déterminer la position de la barre de translation (6) en direction de mouvement ainsi qu'une unité de pipettage avec plusieurs tuyères de pipettage afin qu'une unité de récipients de réaction puisse être disposée sous l'unité de pipettage pour remplir un récipient de réaction.

2. Centrifugeuse (1) selon la revendication 1,
**caractérisée en ce que**
un élément de couplage (10) est disposé à une extrémité libre de la barre de translation (6) située dans le compartiment de rotor (2), sachant que l'élément de couplage (10) est constitué pour connecter de manière reconnectable la barre de translation (6) avec une unité de récipients de réaction ou une unité de support (5) pour une unité de récipients de réaction.

3. Centrifugeuse (1) selon la revendication 2,
**caractérisée en ce que**
l'élément de couplage (10) présente un élément d'encliquetage (17), lequel peut se mettre en prise avec un contre-élément d'encliquetage (18) prévu au niveau de l'unité de récipients de réaction ou au niveau de l'unité de support (5), sachant qu'au moins l'élément d'encliquetage (17) ou le contre-élément d'encliquetage (18) sont logés de manière élastique.

4. Centrifugeuse (1) selon la revendication 3,
**caractérisée en ce que**
le contre-élément d'encliquetage (18) de l'unité de récipients de réaction ou de l'unité de support (5) est logé de manière élastique et couplé avec un étrier de verrouillage (19) de telle sorte que l'étrier de verrouillage (19) soit pivotable entre deux positions, sachant qu'une position de déverrouillage est adoptée lorsque l'élément d'encliquetage (17) et le contre-élément d'encliquetage (18) sont encliquetés l'un avec l'autre, et une position de verrouillage est adoptée lorsque l'élément d'encliquetage (17) et le contre-élément d'encliquetage (18) sont séparés l'un de l'autre, sachant que l'étrier de verrouillage (19) présente un élément de verrouillage qui peut se mettre en prise avec un contre-élément de verrouillage (20) correspondant dans une position de verrouillage.

5. Centrifugeuse (1) selon l'une des revendications 2 à 4,
**caractérisée en ce que**
la barre de translation (6) possède une surface lisse.

6. Centrifugeuse (1) selon l'une des revendications 1 à 5,
**caractérisée en ce que**
la barre de translation (6) est creuse et constituée de manière ouverte à l'extrémité arrière éloignée du compartiment de rotor (2) et une barre filetée (9) est prévue coaxialement à la barre de translation (6), et la barre filetée (9) se trouve en prise par engrènement avec un filetage relié à la barre de translation (6) afin qu'un mouvement de translation de la barre de translation (6) soit exécuté suite à un mouvement de rotation de la barre filetée (9), sachant que la barre filetée (9) peut s'enfoncer dans la barre de translation (6) à l'extrémité arrière.

7. Centrifugeuse (1) selon l'une des revendications 1 à 6,
**caractérisée en ce que**
le compartiment de rotor (2) est enceint par un carter et la barre de translation (6) est guidée à travers une ouverture dans une paroi de carter (16), sachant qu'un élément d'étanchéité (12) qui étanchéifie la barre de translation (6) par rapport à la paroi de carter est prévu dans la zone de l'ouverture.

8. Centrifugeuse (1) selon l'une des revendications 1 à 7,
**caractérisée en ce que**
la centrifugeuse (1) est constituée avec un axe de rotation horizontal autour duquel le rotor tourne pendant le fonctionnement de la centrifugeuse.

9. Centrifugeuse (1) selon l'une des revendications 1 à 8,
**caractérisée par**
une unité de détection optique, sachant que l'unité de détection optique est de préférence constituée et disposée de telle manière qu'elle puisse balayer l'unité de récipients de réaction dans la zone de mouvement de celle-ci de manière adjacente au compartiment de rotor (2).

10. Centrifugeuse (1) selon la revendication 9,
**caractérisée en ce que**
l'unité de détection comprend une caméra linéaire pour balayer l'unité de récipients de réaction ligne par ligne, sachant qu'une ligne de balayage est orientée de manière sensiblement perpendiculaire à la direction de mouvement de l'unité de récipients de réaction.

11. Centrifugeuse (1) selon la revendication 9 ou 10,
**caractérisée en ce que**
l'unité de détection présente une caméra couleur pour balayer spectralement une unité de récipients de réaction.

12. Centrifugeuse (1) selon l'une des revendications 9 à 11,
**caractérisée en ce que**
l'unité de détection optique est constituée pour le balayage 3D d'une unité de récipients de réaction.

13. Centrifugeuse (1) selon l'une des revendications 9 à 12,
**caractérisée en ce que**
la centrifugeuse (1) présente un dispositif d'évaluation avec lequel des signaux obtenus avec le dispositif de détection optique sont évalués automatiquement selon les paramètres suivants :
- couleur du contenu d'au moins un récipient de réaction de l'unité de récipients de réaction,
- niveau de remplissage d'au moins un récipient de réaction de l'unité de récipients de réaction,
- position de l'unité de récipients de réaction,
- type de l'unité de récipients de réaction.

14. Centrifugeuse (1) selon l'une des revendications 1 à 13,
**caractérisée en ce que**
l'entraînement linéaire (11) convertit un mouvement rotatif en un mouvement linéaire par une mise en prise par complémentarité de forme ou par engrènement.

15. Centrifugeuse (1) selon l'une des revendications 1 à 14,
**caractérisée en ce que**
la centrifugeuse (1) présente un carter qui entoure le compartiment de rotor (2), sachant qu'un dispositif de pulvérisation est prévu au niveau du carter pour pulvériser une solution de décontamination dans l'espace intérieur.

16. Centrifugeuse (1) selon l'une des revendications 1 à 15,
**caractérisée en ce que**
la centrifugeuse (1) présente un carter qui enceint le compartiment de rotor (2), sachant que le carter est pourvu d'une fenêtre.

17. Centrifugeuse (1) selon l'une des revendications 1 à 16,
**caractérisée en ce que**
la centrifugeuse (1) présente un dispositif de commande qui pilote l'entraînement linéaire (11), sachant qu'un signal de commande qui décrit la position de la barre de translation (6) est présent dans le dispositif de commande, et le dispositif de commande présente une interface via laquelle la position de la barre de translation (6) peut être transmise à un appareil supplémentaire, comme p. ex. un robot, ou à un composant supplémentaire de la centrifugeuse (1), comme p. ex. une unité de pipettage, de telle sorte que l'appareil supplémentaire ou le composant supplémentaire puissent obtenir la position de la barre de translation (6) et ainsi la position d'une unité de récipients de réaction.

18. Centrifugeuse (1) selon la revendication 17,
**caractérisée en ce que**
le signal de commande décrit la position de la barre de translation (6) avec une précision d'au moins 0,2 mm et de préférence d'au moins 0,1 mm.
